# EUROPEAN PATENT APPLICATION

(11) **EP 2 423 642 A1**
(43) Date of publication of application: **29.02.2012**
(21) Application number: 09843652.0
(22) Date of filing: 23.04.2009
(51) Int. Cl.: G01C 21/00, G08G 1/137, G09B 29/00

(54) **ROUTE GUIDING SYSTEM, ROUTE SEARCH SERVER, ROUTE GUIDING MEDIATION SERVER AND ROUTE GUIDING METHOD**

(71) Applicant: Navitime Japan Co., Ltd., Tokyo 107-0062 (JP)
(72) Inventor: UYAMA, Hiroshi, Tokyo 107-0062 (JP); TSUBOUCHI, Masanori, Tokyo 107-0062 (JP)
(74) Representative: HOFFMANN EITLE
(86) International application number: PCT/JP2009/058098
(87) International publication number: WO 2010/122652

(57) **Abstract**

An area which may be en-route from a departure place to a destination is specified, and when a route which passes through the specified en-route area is an optimal route, a guidance for the optimal route is given. Route search servers (30A, etc.) each of which includes a plurality of service providing areas and has a predetermined area as a service providing area cooperate with one another to search for an optimal route from the departure place to the destination, both set by a terminal device (20), and give a guidance for the optimal route. Each route search server (30A, etc.) includes information on candidate nodes between a local area and each of the other areas, network data and map data within the local area, and route search means (307A). The route search server (30A, etc.) which has received a route search request with the departure place and destination set therein from the terminal device (20) causes a route search server (30B, etc.) in each area, which may be en-route, to search for candidate nodes in each area based on the information on the candidate nodes, and provides the terminal device (20) with a guidance for a candidate node which minimizes the link cost as a recommended route.

## Description

### TECHNICAL FIELD

The present invention relates to a navigation route guiding system for searching and providing guidance for candidate routes from any departure place to a destination by foot, by automobile, or by public traffic systems; and particularly relates to a route guiding system, a route search server, a route guiding mediation server, and a route guiding method designed so that when routes extending across countries or geographic regions are searched and guidance is provided using roads or traffic systems, a plurality of route guiding systems having map data and route search network data for different countries and geographic regions can be made to cooperate, a series of route searches and route guiding services from the departure place to the destination can be smoothly transferred from system to system, areas which may be en-route from the departure place to the destination can be specified, and when a route passing through a specified en-route area is an optimal route, guidance for this optimal route can be provided.

### BACKGROUND ART

In conventional practice, there have been known navigation devices and navigation systems for searching for a route from a desired departure place to a destination and guiding a user using map data and road data. Practical applications of such navigation devices and navigation systems have included communication-type navigation systems and the like in which a portable telephone or a car navigation device installed in an automobile for providing route guidance to a driver is used as a terminal device for navigation, a route search request is sent to the route search server, the results are received, and route guidance is received.

Particularly, communication-type navigation systems are sometimes used as navigation systems for pedestrians. In a navigation system for pedestrians, a route guidance function that includes traffic systems is preferably provided. There are also navigation systems which, in addition to searches and guidance of walking routes, have a function for storing traffic system lines and operating time data for railroads, aircraft, buses, and the like in a route search server, and for providing guidance of routes from desired departure places to desired destinations (ridden candidate trains and the like) in addition to searches of and guidance for walking routes. There are also traffic guidance systems which receive and display the distribution of information on lines and time schedules of traffic systems, rideable trains, and the like from an information distribution server without a search for a walking route.

A route search device and route search method used in a common navigation device and communication navigation system is disclosed in Patent Document 1 (Japanese Laid-open Patent Application No. 2001-165681), for example. This navigation system is configured so as to send information on the departure place and destination from a portable navigation terminal to an information distribution server, and to search for and provide guidance for a route conforming to the search conditions from data on road networks and traffic networks using the information distribution server. The means for moving from the departure place to the destination, e.g., walking, automobile, railroad, aircraft, or other traffic systems, or a combination of walking and traffic systems are included in the search conditions, and these means are treated as one search condition in a route search.

The information distribution server is provided with roads (routes) of map data, wherein the positions of the nodal points and turning points thereof are nodes, the routes joining nodes together are links, and the cost information (distance and required time) of all the links is a database. The information distribution server can provide a portable navigation terminal with guidance for the shortest possible route by referring to the database, sequentially searching for links extending from the node of the departure place to the node of the destination, and creating a guidance route from the nodes and links which minimize the link cost information. Either a method known as the label-correcting method or a method known as the Dijkstra method is used as the method of this manner of route search. In Patent Document 1 hereinbelow, a route search method that uses the Dijkstra method is also disclosed.

A route search system that searches for routes using a traffic system is provided with an operation time database consisting of operation time data of traffic systems incorporated into a database on the basis of a departure date and time, a departure place, a destination, an arrival time, and other route search conditions indicated by a user; and data consisting of a traffic network incorporated into a database on the basis of the operation time database. The configuration is designed so that these databases are referenced, useable traffic means (individual trains and line buses) connecting the departure place to the destination including connections (transfers) are sequentially followed as routes, and one or more candidates of guidance routes (the departure place station, the destination station, lines, trains, and other traffic means) conforming to the route search conditions are suggested. It is common for the required time, the number of connections, fares, and other conditions to be indicated as further route search conditions.

The map data and route search network data provided to a common route guidance system are data on the geographic regions (also known as service target areas) in which the system provides route guidance service. For example, with a normal route guidance system, the service target area will be within a certain country's borders, or a specific geographic region within the country's borders will be the service target.

In this case, if the departure place and the destination are within the service target area of the route guiding system, there are no obstacles whatsoever to the route search and the route guidance. However, in cases in which the departure place is within the borders of a certain country and the destination is within the borders of another country, it is not possible to search for and provide guidance for the total route from the departure place to the destination. This is because the routes which can be searched and for which guidance can be provided by the route guiding system associated with the departure place are within range of the country in which the departure place is located, and these routes do not include map data or route search network data of the other country associated with the destination. Even when the departure place and the destination are within the service providing area of a certain route guiding system, there are cases in which the optimal route is one passing through an area provided with service by another adjacent route guiding system, and it is not possible to search for this route in such cases.

In an onboard navigation device or the like, the installed navigation device stores map data and route search network data of a specified geographic region, and when a point outside of this area is set as the destination, either a route search is requested of a server having map data or route search network data of an entire country including the other geographic region, or a method is employed in which the map data or route search network data of the missing geographic region is downloaded, enabling the navigation device to perform the route search.

For example, an invention of such a route guiding device is disclosed in the following Patent Document 2 (Japanese Laid-open Patent Application No. 2003-97960). With this route guiding device, when a route search from a departure place to a destination is performed in a center, starting points along the route are used as a plurality of candidates. When the starting points are sent to the route guiding device, the route guiding device determines the guidable starting points and sends them to the center. The configuration is designed so that the center performs a route search from the departure place to the starting points, the guiding device performs a route search from the starting points to the destination, and an optimal route from the departure place to the destination is provided.

[Patent Document 1]
   Japanese Laid-open Patent Application No. 2001-165681 (FIGS. 1 and 2)
[Patent Document 2]
   Japanese Laid-open Patent Application No. 2003-97960 (FIGS. 1 and 2)

### DISCLOSURE OF THE INVENTION

### [Problems the Invention Is Intended to Solve]

As previously described, there are cases in which it is not possible to provide route guiding service merely by using map data or route search network data which a certain route guiding system has in order to provide service. As in the invention of the route guiding device disclosed in Patent Document 2 described above, it is possible to comply with the user's service request if cooperation is established with another route guiding system, the portion that cannot be searched by the first route guiding system is searched using the route search function of the other route guiding system, and the guided routes searched by both route guiding systems can be linked.

However, depending on the country, there are cases in which providing map data or data of road networks and traffic networks to another country is prohibited. Such restrictions are primarily for reasons of national security. In the route guiding device disclosed in Patent Document 2 described above, the system is premised on the fact that the map data retained by the route guiding device is map data of partial areas, and the server retains map data of an entire country including map data of the partial areas retained by the navigation device,

In a route guiding system, route search network data is created from information of map data, road networks, or traffic networks and retained as a database, and a map database which stores map information must be retained in order to provide route guidance to a user. When the route guiding system attempts to provide service beyond the country's borders, the system needs map data and data of road networks and traffic networks not only of the local country but also of the other country to which it is attempting to provide service. Therefore, in such cases, problems are encountered in that it is not possible to apply the technology of the route guiding device disclosed in Patent Document 2 described above.

The applicants of the present application have already submitted an international patent application for the invention of PCT/JP2008/058182, with the object of providing a route guiding system wherein route guiding systems having map data and route search network data of different countries and geographic regions are made to cooperate with one another, and a series of route guiding services from a departure place extending to a destination in another country or geographic region is transferred smoothly from system to system.

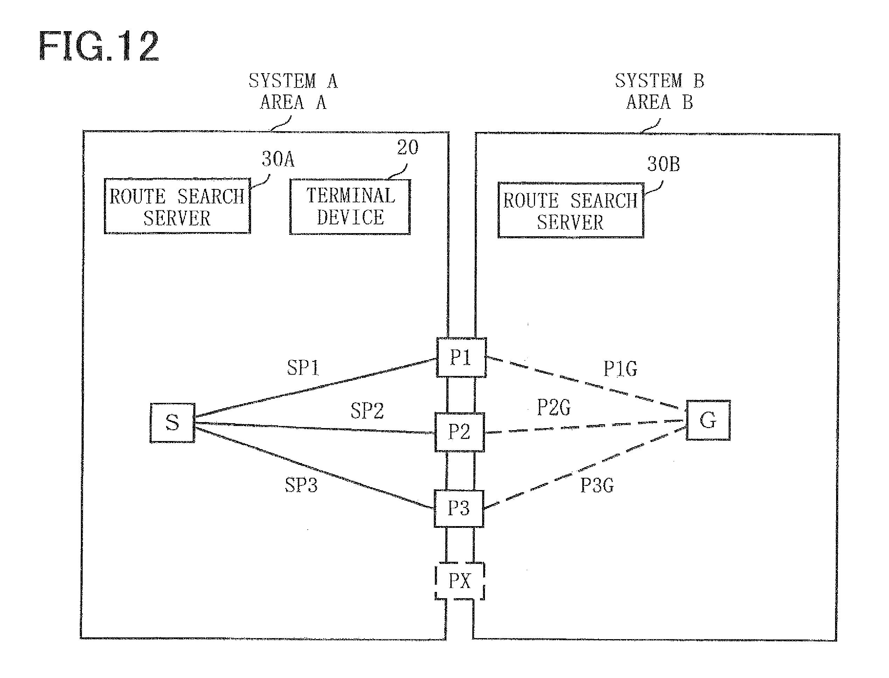

This invention disclosed in the Specification of International Application No. PCT/JP2008/058182 is configured as shown in FIG. 12, wherein first and second route guiding systems having map data and route search network data of different countries or geographic regions are made to cooperate with one another. In FIG. 12, system A is a route guiding system which has area A as a service providing area, system B is a route guiding system which has area B as a service providing area, and system A and system B both have the same configuration as the route guiding systems shown in FIG. 12.

A route search server 30A has only map data and route search network data covering area A, and a route search server 30B has only map data and route search network data covering area B. Therefore, the route search server 30A cannot perform a route search in which the departure place or destination is a point within area B, and the route search server 30B cannot perform a route search in which the departure place or destination is a point within area A.

When the departure place and the destination in the route search request from the terminal device 20 are points in different areas, the first route guiding system (A) extracts candidate nodes at the border of the different areas and sends the candidate nodes to the second route guiding system (B). Optimal routes from the departure place to the candidate nodes and optimal candidate routes from the candidate nodes to the destination are searched by the first and second route guiding systems respectively, their required times and link data are provided to the respective route guiding systems, either the first or second route guiding system determines a recommended route which has the least total required time from among the candidate routes linked from the candidate nodes, recommended route data including link data is provided from the first route guiding system (A) to the terminal device, and the terminal device requests route guidance corresponding to the area where it is positioned from the first or second route guiding system on the basis of the recommended route data.

With such a system configuration, in the case of route guidance to a location that is not a service providing area and does not have map data or the like, the system retains only candidate nodes between the service providing areas and the area containing the destination that is not in a service providing area, it is possible to provide seamless route guidance from the departure place in a service providing area to the destination not in a service providing area by sharing only the candidate information and using the respective route guidance information. Therefore, the respective route guiding systems having map data and route search network data of the different countries and geographic regions can be made to cooperate with one another, and a series of route guiding services from the departure place to a destination in a different country or geographic region can be smoothly transferred from system to system.

However, in the system shown in FIG. 12, the following two points are not taken into account. The first is that when the departure place and the destination are in the same area (e.g., in area A of FIG. 12), only routes passing through this area alone are the object of the route search. Therefore, problems have been encountered in that since routes in areas provided with service by other route guiding systems are not taken into account, even if there is an optimal route among the routes through an adjacent area (area B of FIG. 12) provided with service by another route guiding system, it is not possible to search for such a route. For example, even if a route which temporarily enters an adjacent area (area B) from the departure place moves through the adjacent area (area B), and leads to the destination in area A is a route which has a shorter required time or required distance than routes which move only through area A, it is not possible to search for such a route.

Second, when the departure place and the destination are points located in different areas (e.g., the departure place is in area A and the destination is in area B), a route search is performed using candidate nodes at the border between area A and area B, and problems have therefore been encountered in that while routes which pass through another third area to reach the destination in area B may include an optimal route which has a shorter required time or required distance than routes which lead from the departure place in area A directly to the destination in area B, it is not possible to search for such a route. There have also been problems in cases in which regions that are impassable due to political instability or geographical issues are included in a route leading from the departure place in area A directly to the destination in area B, where it is preferable to search for a route which avoids this region and passes through the third area to reach the destination in area B, but it is not possible to search for such a route.

The result of a variety of studies by the inventors of the present application with the intention of resolving these problems is that when a search is conducted and guidance provided for a route extending across countries or geographic regions, cooperation is established between route search servers which have map data and route search network data of the different countries and geographic region and which have different areas as service providing areas, the route search servers exchange point information of a plurality of candidate nodes in movement means joining the countries or geographic regions on the basis of the point information of the departure place and destination, the route search servers search for optimal candidate routes to candidate nodes with the departure place or destination and optimal candidate routes between candidate nodes and exchange the data (link costs) of the candidate node and candidate routes, the candidate routes searched by the route search servers in their local areas and the candidate routes searched by the other route search servers are integrated in the candidate nodes, the candidate route having the least cost from the departure place to the destination is designated as a recommended route, and this recommended route is provided to a terminal device. A route search server which has received a route search request from a terminal device specifies areas which may be en-route to the destination and the route search servers that provide service to those areas, transmits candidate route information including the specified server information, the departure place, the destination, information of candidate nodes, and link costs to the candidate nodes, and performs a relay route search request. The route search server that receives the relay route search request distinguishes whether or not the destination is in a local area, and if the destination is not in the local area, the server determines if it is possible to move to this area based on the specified route search server information, searches for candidate routes using candidate nodes with passable areas as provisional destinations, transmits the information of the candidate nodes, candidate routes, and destination to the specified route search server and the route search server that made the original request. The route search server that made the original request acquires the information of the candidate routes and candidate nodes in all of the areas, and determines a recommended route which minimizes the link cost from the departure place to the destination. The present invention was completed on the premise that if the preceding is achieved, the problems described above can be resolved.

Specifically, the present invention is intended to resolve the problems described above, it being an object thereof to provide a route guiding system wherein a series of route searches and route guiding services from a departure place to a destination is smoothly transferred from system to system, areas which may be en-route from the departure place to the destination are specified, and when a route through a specified en-route area is an optimal route, guidance can be provided for this optimal route.

### [Means for Resolving These Problems]

To resolve the problems previously described, a first aspect of the present application is:
a route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route guiding system **characterized in that**:
each of the route search servers includes information on candidate nodes connecting a local area and each of the other areas, network data and map data within the local area for route searches, and route search means;
a first route search server which has received a route search request with the departure place and the destination set therein from the terminal device and which has a first area as a service providing area determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
the second route search server distinguishes whether or not the destination is within a local area, and when the destination is within the local area, the second route search server searches for candidate routes to the destination from the corresponding candidate nodes received from the first route search server and transmits the information of the searched candidate routes to the first route search server, and when the destination is not within the local area, the second route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-route areas as service providing areas, requests a candidate route search within a third area, links on the basis of the candidate node information the candidate routes in the third area received from the third route search server with the candidate routes in the local area, and transmits the linked information to the first route search server; and
the first route search server searches for candidate routes in the first area from the departure place to the candidate nodes, and, based on candidate node information, links the candidate routes received from the second route search servers with the candidate routes in the first area, designates these routes as candidate routes from the departure place to the destination, determines the candidate route which minimizes the link cost from the departure place to the destination to be a recommended route, and provides the recommended route to the terminal device.

A first mode of the first aspect is the invention of the first aspect, **characterized in that** when the first route search server requests a search for candidate routes from the second route search server, the first route search server correlates information of candidate routes to the candidate nodes within the first area with the candidate nodes and transmits the information, the second route search server links on the basis of the candidate node information the candidate routes in the local area obtained in the candidate route search, and the second route search server uses only the candidate route which minimizes the link cost of the linked candidate route and transmits only information of the linked candidate route which minimizes the link cost to the first or the third route search server.

A second mode of the first aspect is the invention of the first aspect, **characterized in that** when each of the route search servers which has each of the areas as a service providing area is requested by another route search server to search for candidate routes through the local area and the local area is reached by passing through a predetermined number of areas, the route search server transmits the search results of candidate routes in the local area only to the route search server which has as a service providing area the area where the destination is located.

A third mode of the first aspect is the invention of the first aspect, **characterized in that** when each of the route search servers which has each of the areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where the destination is located.

A fourth mode of the first aspect is the invention of the first aspect, **characterized in that** the first route search server sets a provisional direct route connecting the departure place and destination and determines areas included within a predetermined distance from the provisional direct route to be areas which may be en-route.

A fifth mode of the first aspect is the invention of the first aspect, **characterized in that** the areas which may be en-route are areas to which there exists a possibility of moving from the area where the departure place is located, wherein a predetermined number of these areas meet preset conditions.

A sixth mode of the first aspect is the invention of the first aspect, **characterized in that** when the departure place and the destination are within the first area, the first route search server searches for optimal routes from the departure place to the destination and designates these routes as candidate routes.

A second aspect of the present application is:
route search servers of areas constituting a route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route search servers **characterized in that**:
the route search server has information of candidate nodes connecting a local area with the other areas, network data and map data of the local area for route searches, and route search means;
a route search server that has received a route search request containing a set departure place and destination from the terminal device determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another route search server which has a determined en-route area as a service providing area, and requests a search for candidate routes in the corresponding area;
the other route search server distinguishes whether or not the destination is within the local area, and when the destination is within the local area, the other route search server searches for candidate routes to the destination from the corresponding candidate nodes received from the first route search server and transmits the information of the searched candidate routes to the first route search server, and when the destination is not within the local area, the other route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-route areas as service providing areas, requests a candidate route search within yet another area, links on the basis of the candidate node information the candidate routes in the yet another area received from the third route search server with the candidate routes in the local area, and transmits the linked information to the route search server; and
the route search server searches for candidate routes in the local area from the departure place to the candidate nodes, links the candidate routes received from the other route search servers with the candidate routes in the local area, designates these routes as candidate routes from the departure place to the destination, determines the candidate route which minimizes the link cost from the departure place to the destination to be a recommended route, and provides the recommended route to the terminal device.

A first mode of the second aspect is the invention of the second aspect, **characterized in that** when the route search server requests a search for candidate routes from the other route search server, the route search server correlates information of candidate routes to the candidate nodes within the local area with the candidate nodes and transmits the information, the other route search server links on the basis of the candidate node information the candidate routes in the local area obtained in the candidate route search, and the other route search server uses only the candidate route which minimizes the link cost of the linked candidate route and transmits only information of the linked candidate route which minimizes the link cost to the other route search server or to yet another route search server.

A second mode of the second aspect is the invention of the second aspect, **characterized in that** when each of the route search servers which has each of the areas as a service providing area is requested by another route search server to search for candidate routes through the local area and the local area is reached by passing through a predetermined number of areas, the route search server transmits the search results of candidate routes in the local area only to the route search server which has as a service providing area the area where the destination is located.

A third mode of the second aspect is the invention of the second aspect, **characterized in that** when each of the route search servers which has each of arenas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where the destination is located.

A fourth mode of the second aspect is the invention of the second aspect, **characterized in that** the route search server sets a provisional direct route connecting the departure place and destination; and determines areas included within a predetermined distance from the provisional direct route to be areas which may be en-route.

A fifth mode of the second aspect is the invention of the second aspect, **characterized in that** the areas which may be en-route are areas to which there exists a possibility of moving from the area where the departure place is located, wherein a predetermined number of these areas meet preset conditions.

A sixth mode of the second aspect is the invention of the second aspect, **characterized in that** when the departure place and the destination are within the first area, the first route search server searches for optimal routes from the departure place to the destination and designates these routes as candidate routes.

A third aspect of the present application is:
a route guiding method in a route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route guiding method **characterized in that**:
each of the route search servers includes information on candidate nodes connecting a local area and each of the other areas, network data and map data within a local area for route searches, and route search means;
a first route search server which has received a route search request with the departure place and the destination set therein from the terminal device and which has a first area as a service providing area determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
the second route search server distinguishes whether or not the destination is within the local area, and when the destination is within the local area, the second route search server searches for candidate routes to the destination from the corresponding candidate nodes received from the first route search server and transmits the information of the searched candidate routes to the first route search server, and when the destination is not within the local area, the second route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-route areas as service providing areas, and requests a candidate route search within a third area;
the second route search server links on the basis of the candidate node information the candidate routes received from the third route search server with the candidate routes in the local area, and transmits the linked information to the first route search server; and
the first route search server searches for candidate routes in the first area from the departure place to the candidate nodes, and, based on the candidate node information, links the candidate routes received from the second route search servers with the candidate routes in the first area, designates these routes as candidate routes from the departure place to the destination, determines the candidate route which minimizes the link cost from the departure place to the destination to be a recommended route, and provides the recommended route to the terminal device.

A first mode of the third aspect is the invention of the third aspect, **characterized in that** when the first route search server requests a search for candidate routes from the second route search server, the first route search server correlates Information of candidate routes to the candidate nodes within the first area with the candidate nodes and transmits the information, the second route search server links on the basis of the candidate node information the candidate routes in the local area obtained in the candidate route search, and the second route search server uses only the candidate route which minimizes the link cost of the linked candidate route and transmits only information of the linked candidate route which minimizes the link cost to the first or the third route search server.

A second mode of the third aspect is the invention of the third aspect, **characterized in that** when each of the route search servers which has each of the areas as a service providing area is requested by another route search server to search for candidate routes through the local area and the local area is reached by passing through a predetermined number of areas, the route search server transmits the search results of candidate routes in the local area only to the route search server which has as a service providing area the area where the destination is located.

A third mode of the third aspect is the invention of the third aspect, **characterized in that** when each of the route search servers which has each of the areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where the destination is located.

A fourth mode of the third aspect is the invention of the third aspect, **characterized in that** the first route search server sets a provisional direct route connecting the departure place and destination and determines areas included within a predetermined distance from the provisional direct route to be areas which may be en-route.

A fifth mode of the third aspect is the invention of the third aspect, **characterized in that** the areas which may be en-route are areas to which there exists a possibility of moving from the area where the departure place is located, wherein a predetermined umber of these areas meet preset conditions.

A sixth mode of the third aspect is the invention of the third aspect, **characterized in that** when the departure place and the destination are within the first area, the first route search server searches for optimal routes from the departure place to the destination and designates these routes as candidate routes.

A fourth aspect of the present application is:
a route guiding system wherein route search servers, each of which including a plurality of service providing areas and having a predetermined area as a service providing area, cooperate with one another via a route guiding mediation server to search for an optimal route from a departure place to a destination, both set by a terminal device, and give a guidance for the optimal route; the route guiding system **characterized in that**:
each of the route search servers includes information on candidate nodes connecting a local area and each of the other areas, network data and map data within a local area for route searches, and route search means;
a first route search server which has received a route search request with the departure place and the destination set therein from the terminal device and which has a first area as a service providing area requests candidate route search mediation from the guiding mediation server along with the information of the departure place and destination;
the route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
the second route search server distinguishes whether or not the destination is within the local area, and when the destination is within the local area, the second route search server searches for candidate routes to the destination from the corresponding candidate nodes received from the first route search server and transmits the information of the searched candidate routes to the route guiding mediation server, and when the destination is not within the local area, the second route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-route areas as service providing areas, requests a candidate route search within a third area, links on the basis of the candidate node information the candidate routes in the third area received from the third route search server with the candidate routes in the local area, and transmits the linked information to the route guiding mediation server; and
the first route search server searches for candidate routes in the first area from the departure place to the candidate nodes, and, based on the candidate node information, links the candidate routes received from the route guiding mediation server with the candidate routes in the first area, designates these routes as candidate routes from the departure place to the destination, determines the candidate route which minimizes the link cost from the departure place to the destination to be a recommended route, and provides the recommended route to the terminal device.

A fifth aspect of the present application is:
a route guiding mediation server constituting a route guiding system wherein route search servers, each of which including a plurality of service providing areas and having a predetermined area as a service providing area, cooperate with one another via the route guiding mediation server to search for an optimal route from a departure place to a destination, both set by a terminal device, and give a guidance for the optimal route; the route guiding mediation server **characterized in that**:
each of the route search servers includes information on candidate nodes connecting a local area and each of the other areas, network data and map data within a local area for route searches, and route search means;
a first route search server which has received a route search request with the departure place and the destination set therein from the terminal device and which has a first area as a service providing area requests candidate route search mediation from the guiding mediation server along with the information of the departure place and destination;
a second route search server distinguishes whether or not the destination is within the local area on the basis of a candidate route search request from the route guiding mediation server, and when the destination is within the local area, the second route search server searches for candidate routes to the destination from the corresponding candidate nodes received from the route guiding mediation server and transmits the information of the searched candidate routes to the route guiding mediation server, and when the destination is not within the local area, the second route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-route areas as service providing areas, requests a candidate route search within a third area, links on the basis of the candidate node information the candidate routes in the third area received from the third route search server with the candidate routes in the local area, and transmits the linked information to the route guiding mediation server;
the first route search server searches for candidate routes in the first area from the departure place to the candidate nodes, and, based on the candidate node information, links the candidate routes received from the route guiding mediation server with the candidate routes in the first area, designates these routes as candidate routes from the departure place to the destination, determines the candidate route which minimizes the link cost from the departure place to the destination to be a recommended route, and provides the recommended route to the terminal device; and
the route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area.

A first mode of the fifth aspect is the invention of the fifth aspect, **characterized in that** when the first route search server requests a search for candidate routes from the route guiding mediation server, the first route search server correlates information of candidate routes to the candidate nodes within the first area with the candidate nodes and transmits the information, the second route search server links on the basis of the candidate node information the candidate routes in the local area obtained in the candidate route search, and the second route search server uses only the candidate route which minimizes the link cost of the linked candidate route and transmits only information of the linked candidate route which minimizes the link cost to the route guiding mediation server.

A second mode of the fifth aspect is the invention of the fifth aspect, **characterized in that** when each of the route search servers which has each of the areas as a service providing area is requested by another route search server to search for candidate routes through the local area and the local area is reached by passing through a predetermined number of areas, the route search server transmits the search results of candidate routes in the local area only to the route search server which has as a service providing area the area where the destination is located.

A third mode of the fifth aspect is the invention of the fifth aspect, **characterized in that** when each of the route search servers which has each of the areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where the destination is located.

A fourth mode of the fifth aspect is the invention of the fifth aspect, **characterized in that** the route guiding mediation server sets a provisional direct route connecting the departure place and destination and determines areas included within a predetermined distance from the provisional direct route to be areas which may be en-route.

A fifth mode of the fifth aspect is the invention of the fifth aspect, **characterized in that** the areas which may be en-route are areas to which there exists a possibility of moving from the area where the departure place is located, wherein a predetermined number of these areas meet preset conditions.

A sixth mode of the fifth aspect is the invention of the fifth aspect, **characterized in that** when the departure place and the destination are within the first area, the first route search server searches for optimal routes from the departure place to the destination and designates these routes as candidate routes.

A sixth invention of the present application is:
a route guiding method wherein route search servers, each of which including a plurality of service providing areas and having a predetermined area as a service providing area, cooperate with one another via a route guiding mediation server to search for an optimal route from a departure place to a destination, both set by a terminal device, and give a guidance for the optimal route; the route guiding method **characterized in that**:
each of the route search servers includes information on candidate nodes connecting a local area and each of the other areas, network data and map data within a local area for route searches, and route search means;
a first route search server which has received a route search request with the departure place and the destination set therein from the terminal device and which has a first area as a service providing area requests candidate route search mediation from the guiding mediation server along with the information of the departure place and destination;
the route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
the second route search server distinguishes whether or not the destination is within the local area, and when the destination is within the local area, the second route search server searches for candidate routes to the destination from the corresponding candidate nodes received from the first route search server and transmits the information of the searched candidate routes to the route guiding mediation server, and when the destination is not within the local area, the second route search server designates as provisional departure places the candidate nodes connecting the first area with the local area, designates as provisional destinations candidate nodes connecting the local area with the en-route areas received from the first route search server, searches for candidate routes from the provisional departure places to the provisional destinations, transmits the en-route areas, the route search server information, the candidate node information, and the destination point information to a third route search server which has the en-raute areas as service providing areas, requests a candidate route search within a third area, links on the basis of the candidate node information the candidate routes in the third area received from the third route search server with the candidate routes in the local area, and transmits the linked information to the route guiding mediation server; and
the first route search server searches for candidate routes in the first area from the departure place to the candidate nodes, and, based on the candidate node information, links the candidate routes received from the route guiding mediation server with the candidate routes in the first area, designates these routes as candidate routes from the departure place to the destination, determines the candidate route which minimizes the link cost from the departure place to the destination to be a recommended route, and provides the recommended route to the terminal device.

### [Effect of the Invention]

In the first invention of the present application, route search servers, each of which including a plurality of service providing areas and having a predetermined area as a service providing area, cooperate with one another to search for an optimal route from the departure place to the destination, both set by a terminal device, and give a guidance for the optimal route. Each of the route search servers includes information on candidate nodes between a local area and each of the other areas, network data and map data within the local area, and route search means. The route search server which has received a route search request with the departure place and destination set therein from the terminal device causes a route search server in each area, which may be en-route, to search for candidate nodes in each area based on the information on the candidate nodes, links the candidate routes of each area, and provides the terminal device with guidance for a candidate route which minimizes the link cost as a recommended route.

According to a configuration of such description, different route search servers which have different areas as service providing areas can cooperate with one another, and according to the departure place and destination set by the terminal device 20, a relay can be established between different areas to provide guidance for a candidate route which minimizes the link cost of the route from the departure place to the destination as a recommended route. The terminal device which has acquired the recommended route information from the route search server can request route guidance from the route search server which has the area where the terminal device is located as a service providing area while the terminal device is in this area, and the terminal device can receive route guidance within the area.

There are cases in which the recommended route passes through one or any number of en-route areas from the departure place to the destination, and there are also cases in which the recommended route moves from the area where the departure place S is positioned to the area where the destination G is positioned without passing through any en-route areas. Even in cases in which the departure place and the destination are in the same area, the recommended route may be either a route leading from the departure place to the destination within this area, or a route which leads from the departure place and passes through one or any number of en-route areas to reach the destination. The terminal device can acquire and display on a map the map information of the corresponding area within each area for the recommended route from the departure place to the destination based on the recommended route information acquired from the route search server, and the terminal device can receive route guidance while displaying the recommended route on the map.

In the first aspect of the present invention, when each of the route search servers which has each of the areas as a service providing area is requested by another route search server to search for candidate routes through the corresponding area, the route search server correlates information of candidate routes to the candidate nodes within the local area with the candidate nodes and transmits the information, the other route search server which has received the candidate route search request links on the basis of the candidate node information the candidate routes in the local area obtained in the candidate route search, and the other route search server uses only the candidate route which minimizes the link cost of the linked candidate route and transmits only information of the linked candidate route which minimizes the link cost to the route search server that originally made the request. This makes it possible to reduce the number of candidate routes, and facilitate determining the recommended route.

In the first aspect of the first invention of the present application, when each of the route search servers which has each of the areas as a service providing area is requested by another route search server to search for candidate routes through the local area and the local area is reached by passing through a predetermined number of areas, the route search server transmits the search results of candidate routes in the local area only to the route search server which has as a service providing area the area where the destination is located. This prevents the number of en-route areas from increasing unnecessarily. When such a method is used, information of candidate nodes and information of candidate routes to the local area are acquired along with en-route area information and server information of the en-route areas, the number of en-route areas and servers can be determined, and the route search server of the area containing the destination can be specified from the destination information.

In the first aspect of the first invention of the present application, when each of the route search servers which has each of the areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where the destination is located. It is thereby possible to reduce the number of candidate routes, and facilitate determining the recommended route without unnecessarily increasing the number of en-route areas.

In the first aspect of the first invention of the present application, the first route search server sets a provisional direct route connecting the departure place and destination and determines areas included within a predetermined distance from the provisional direct route to be areas which may be en-route. It thereby becomes easier to determine a predetermined number of en-route areas.

In the first aspect of the first invention of the present application, the areas which may be en-route are areas to which there exists a possibility of moving from the area where the departure place is located, wherein a predetermined number of these areas meet preset conditions. If such a configuration is adopted, areas where the geographic region that the route passes through is impassable (entry is forbidden) due to a political situation or any other circumstances can be excluded from the possible en-route areas; it will be possible to implement settings so that only areas within a predetermined time range or distance range from the area containing the departure place are determined to be possible en-route areas, as well as settings wherein a predetermined number of high-ranked areas are determined to be possible en-route areas, the areas being ranked in order of shortest movement time or movement distance between candidate nodes linking areas together; and the number of en-route areas is not unnecessarily increased.

In the first aspect of the first invention of the present application, when the departure place and the destination are within the first area, the first route search server searches for optimal routes from the departure place to the destination and designates these routes as candidate routes. Thereby, even in cases in which the departure place S and destination G are points in the same area and a route leading from the departure place S and passing through another area to reach the destination G is an optimal route, it is possible to search for such a route.

In the second invention of the present application, there can be provided a route search server constituting the route guiding system according to the first invention, and in the third invention of the present application, there can be provided a route guiding method in the route guiding system according to the first invention. In the fourth invention of the present application, the route guiding system according to the first invention can be realized using a route guiding mediation server; in the fifth invention of the present application, a route guiding mediation server constituting the route guiding system in the fourth invention can be provided; and in the sixth invention of the present application, the route guiding method in the fourth invention can be provided.

### BRIER DESCRIPTION OF THE DRAWING

FIG. 1 is a system configuration diagram depicting the configuration of a route guiding system according to the present invention;
FIG. 2 is a system configuration diagram for illustrating a summary of the route search and route guidance of the present invention;
FIG. 3 is a system configuration diagram for illustrating a summary of a case in which the departure place and destination are in the same area in the route search and route guidance of the present invention;
FIG. 4 is a summary diagram showing an example of a sequence whereby a route search server which has a certain area as a service providing area determines en-route areas;
FIG. 5 is a diagram showing an example of candidate routes leading from a departure place S to a destination G, which are searched when the route search servers of the en-route areas shown in FIG. 4 4 cooperate;
Fig. 6 is a block diagram showing the detailed configuration of the route guiding system according to the present invention;
FIG. 7 is a schematic diagram for illustrating the road network data used in a route search of the present invention;
FIG. 8 is a schematic diagram for illustrating the traffic network data used in a route search of the present invention;
FIG. 9 is a flowchart showing the operation sequence of the route search server of area A containing the departure place;
FIG. 10 is a flowchart showing the operation sequence of a route search server associated with an en-route area;
FIG. 11 is a block configuration diagram showing the detailed configuration of a route guiding mediation server provided in the route guiding system according to Embodiment 2 of the present invention; and
FIG. 12 is a system configuration diagram for illustrating a summary of the route guiding service provided by a plurality of route guiding systems having different service areas.

### BEST MODE FOR CARRYING OUT THE INVENTION

The present invention is described in detail below using specific embodiments and drawings. The embodiments below are intended to present examples of a route guiding system for specifying the technological concepts of the present invention and are not intended to limit the present invention to this route guiding system. Such embodiments are equally applicable to other embodiments of a route guiding system included within the scope of the claims.

### [Embodiment 1]

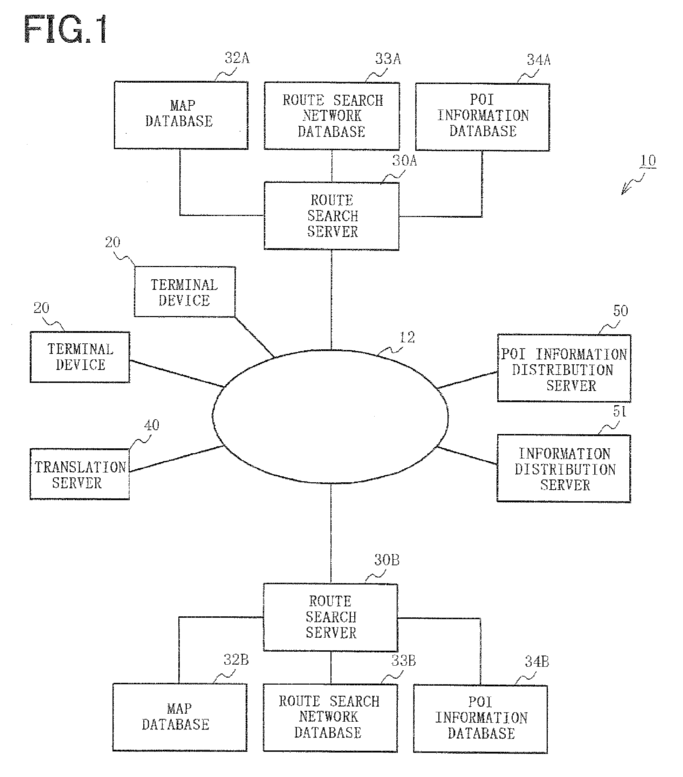

FIG. 1 is a system configuration diagram depicting the configuration of a route guiding system 10 according to the present invention. As depicted in FIG. 1, the route guiding system 10 is provided with terminal devices 20, a first route search server 30A, and a second route search server 30B which are connected via a network 12. Each of the first and second route search servers 30A, 30B of the route guidance system 10 uses specified countries and geographic regions as areas in which the route search and route guidance service is provided, and of the route search servers 30A, 30B has only route search network data or map data covering the specified service providing areas. In FIG. 1, only the route search servers 30A, 30B are shown, but there are other such service providing areas, each of which areas having a route search server, which cooperate with one other to perform route searches.

The route guidance system 10 comprises a POI information distribution server 50 for providing the location, service specifics, and other detailed information of POIs (points of interest) belonging to various categories, various other information distribution servers 51 for providing content such as music and various images as well as other information, and the like. The first and second route search servers 30A, 30B can thereby acquire needed data from the POI information distribution server 50 and the other information distribution servers 51 via the network 12 and can add the data to their own databases. The first and second route search servers 30A, 30B can also similarly transmit a retrieval request to the POI information distribution server 50 or the other information distribution servers 51 and acquire the desired retrieval results.

The route guidance system 10 according to the present invention is not limited to the configuration described above; the first and second route search servers 30A, 30B may have a navigation service function as well as a map distribution server function for distributing maps of specific POI locations. A cellular telephone can be used as a terminal device 20, and other options include a PDA, a music player, a portable game device, and other portable devices; and a mobile personal computer (PC).

The first and second route search servers 30A, 30B shown in FIG. 1 comprise map databases 32A, 32B and network databases 33A, 33B for route search, and when a route search request comes from a terminal device 20, the route search servers refer to the network databases 33A, 33B for route search and conduct a route search. The servers also transmit to the terminal devices 20 the guidance route data of an optimal route or a candidate route obtained from the route search results. When a request comes from a terminal device 20 to retrieve a desired point or POI and acquire its map data, relevant map data is retrieved with reference to the map databases 32A, 32B, and the data is distributed to the terminal device 20.

The network databases 33A, 33B for route search comprise road network data for searching for routes by walking or automobile, and a traffic network data for searching for routes for traveling by railroad, aircraft, boat, bus, or other traffic systems. The road network data designates the intersection points and nodal points of the roads as nodes and expresses the connections between nodes as links, and the times required when traveling at standard speeds are associated with the links as link costs.

The traffic network data designates line stations, airports, and harbors of traffic systems as nodes and expresses the connections between nodes as links, wherein the various traffic means including individual trains, aircraft, boats, buses, and the like constitute links, and the data is configured from data to which node departure times and node arrival times have been assigned based on operation time schedules.

In the terminal devices 20, there are designated route search conditions which specify departure places, destinations, movement means (walking, automobile, traffic systems, and the like), departure times, and other time conditions, and when a route search request comes to the first and second route search servers 30A, 30B, the first and second route search servers 30A, 30B refer to the network data of the network databases 33A, 33B for route search and searches for an optimal route or a plurality of candidate routes conforming to the route search conditions from the departure place to the destination, and then responds to the terminal devices 20 with information on the routes. When a route is selected and a route guidance request is issued in a terminal device 20, map data, data on the selected route, and guidance data for providing guidance through the route are transmitted to the terminal device 20.

In the present invention, different route search servers which have different areas as service providing areas cooperate with one other, and these servers can relay between the different areas and conduct a search and provide guidance for a recommended route, which is the optimal route that minimizes the route link cost from the departure place to the destination set by the terminal device 20.

### (Summary of search for optimal route through multiple areas)

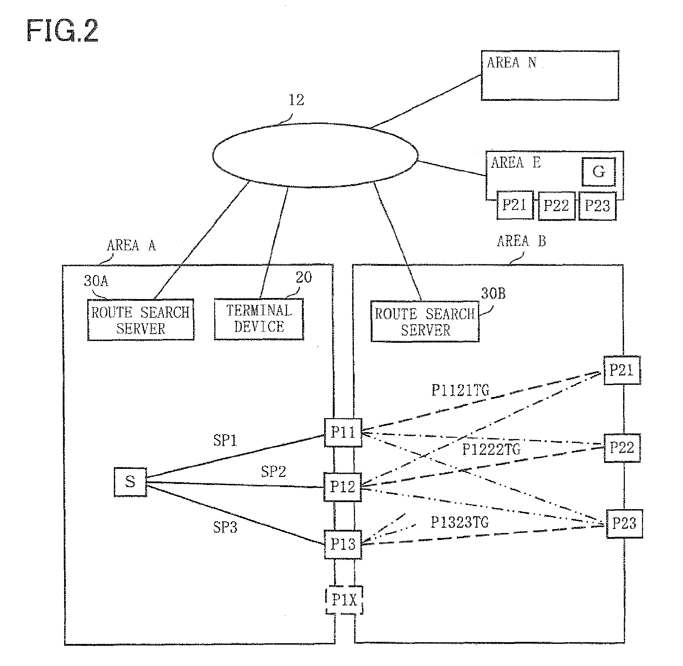

FIG. 2 is a system configuration diagram for illustrating a summary of route searching and route guidance of the present invention using this type of route guidance server cooperation. In FIG. 2, area A is the service providing area of the first route search server 30A, and area B is the service providing area of the second route search server 30B. Areas E through N also have route search servers with respective areas as their service providing areas. These route search servers all have the same configurations and the same functions.

The route search server 30A of area A has only map data and route search network data covering area A, and the route search server 30B of area B has only map data and route search network data covering area B. Therefore, the first route search server 30A cannot search for routes in which the departure place or destination is a point within area B, and the second route search server 30B cannot search for routes in which the departure place or destination is a point within area A.

In the present invention, when a terminal device 20 at a position in area A sends to the first route search server 30A a route search request in which the departure place S and the destination G are route search conditions, the first route search server 30A and the second route search server 30B cooperate with another route search server in the following manner, and an optimal route from the departure place S to the destination G is determined as a recommended route and provided as guidance to the terminal device 20. When the departure place S and the destination G are points within different areas, a search is conducted not only for routes connecting the two areas containing the departure place S and the destination G but also for candidate routes passing through other areas that do not contain the departure place S or the destination G, and when a candidate route is the optimal route which minimizes the link cost, the route passing through this other area is determined as a recommended route.

Even when the departure place S and the destination G belong to the same area, a search is conducted for an optimal route from the departure place S to the destination G within this area, and a search is conducted for a candidate route passing through another area as well (a candidate route which enters an en-route area from the departure place S and then returns to the destination G from the en-route area). The recommended route is determined by a comparison with the candidate route from the departure place S to the destination G within the same area. Therefore, the term "candidate route search" used in the present invention refers to a search for an optimal route that minimizes the link cost between two arbitrary points within a given area.

The route search server 30A of area A has only map data and route search network data covering area A, and the route search server 30B of area B has only map data and route search network data covering area B. Therefore, the first route search server 30A cannot search for routes in which the departure place or destination is a point within area B, and the second route search server 30B cannot search for routes in which the departure place or destination is a point within area A.

In the present invention, when a terminal device 20 at a position in area A sends to the first route search server 30A a route search request containing a set departure place S and destination G, and also when an optimal route having the lowest total route cost is among candidate routes through areas that do not contain the departure place S or the destination G regardless of whether or not the departure place S and the destination G are within different areas, the optimal route can be determined as a recommended route and provided as route guidance to the terminal device 20. In cases such as when there is an impassable geographic region in a route linking the areas containing the departure place S and the destination G, this geographic region is excluded. The sequence for this is described hereinbelow based on a specific example.

### (Description of specific example of search for recommended route through multiple areas)

FIG. 2 is referenced to describe a case in which the terminal device 20 positioned in area A sets a departure place S within area A and a destination G within area E as route search conditions, and sends a route search request to the route search server 30A that provides service to area A, for example. Having received the route search request, the route search server 30A determines a predetermined number of en-route areas which may be en-route or be capable of being en-route from the departure place S to the destination G, and the route search server 30A determines the route search servers 30B, and the like that provide service to these areas.

The en-route areas are geographically adjacent, and areas positioned within the range of a predetermined distance may be the en-route areas, or a linear route from the departure place S to the destination G may be set as a provisional route and areas within the range of a predetermined distance from the provisional route may be the en-route areas. A predetermined number of en-route areas may also be selected based on boundary nodes or other candidate node information linking area A with other areas stored in the route search server 30A. Furthermore, in cases in which the en-route areas include areas containing geographic regions that are impassable due to various circumstances, e.g., political instability, natural events, or other circumstances, these areas are not specified as en-route areas and the route search servers providing service to these areas are not specified.

In this description, area B, area E, and area N are specified (determined) as en-route areas, and their corresponding route search servers 30B, 30E, and 30N are specified (determined) as well. Omitted from FIG. 2 are the route search server 30E which has area E as a service providing area and the route search server 30N which has area N as a service providing area. The route search server 30A extracts candidate nodes leading from area A to the en-route areas B, E, and N, searches for optimal routes within area A leading from the departure place S to these candidate nodes, and uses these optimal routes as candidate routes to the candidate nodes.

### (Description of a case of the departure place and the destination in the same area)

When the departure place S and the destination G are both points within area A (a local area), the route search server 30A performs a route search within area A in addition to requesting a route search of the route search servers 30B and the like of en-route areas. Specifically, the route search server 30A searches for an optimal route within area A leading from the departure place S to the destination G and stores the searched optimal route as a candidate route, and also extracts candidate nodes to other areas which may be en-route and searches for optimal routes between the extracted candidate nodes and the departure place S. The searched optimal routes are designated as candidate routes and transmitted to the route search servers 30B and the like of the other corresponding areas.

The candidate route within area A from the departure place S to the destination G searched in the route search server 30A is compared with candidate routes searched via other route search servers in a sequence described hereinafter, and a recommended route is determined. In this case, even when the departure place S and the destination G are points within the same area and a route leading from the departure place S through another area to the destination G is an optimal route, such a route can still be searched. The sequence for such a case is described hereinafter.

### (Request for candidate route search from route search server of en-route area)

Next, the route search server 30A transmits to the route search servers 30B and the like of the en-route areas server information of the route search server specified by the route search server 30A, information of the destination and candidate nodes leading to the areas, and information of candidate routes to the candidate nodes (including at least information of the required times (link costs)); and the route search server 30A requests a search for en-route routes from these servers. The transmitted candidate node information and candidate route information are transmitted to the route search servers that provide service to the corresponding areas.

Having received a search request for en-route routes from the route search server 30A, the route search servers 30B, 30E, and 30N of the en-route areas search for candidate routes within their areas and link these routes with information of candidate routes within area A received from the route search server 30A, on the basis of candidate node information in the sequence hereinbelow. The action of, e.g., the route search server 30B is described hereinbelow. The other route search servers 30E and 30N also perform the same action as the route search server 30B. In this description, the destination G is not a point within area B, but is a point within area E.

From the route search server 30A, the route search server 30B receives server information of the route search server 30A itself, server information of the route search servers 30E, 30N that provide service to the en-route areas specified by the route search server 30A, point information of the destination G, information of the candidate nodes P11 to P13 between area A and area B, and information of the candidate routes (optimal routes) SP1 to SP3 within area A leading from the departure place S respectively to the candidate nodes P11 to P13. The route search server 30B first distinguishes whether or not the destination G is a point within area B. Since the destination G is not within area B in this case, based on the server information received from the route search server 30A, the route search server 30B determines whether or not the area provided with service by the corresponding route search server is an area that can be reached from area B. If it cannot be reached, the route search server 30B excludes this area and extracts candidate nodes that link the local area with areas that can be reached.

A case is described here in which area A is an area that can be reached. The route search server 30B extracts candidate nodes P21 to P23 that link with area E. When the candidate nodes P21 to P23 are extracted, each of the candidate nodes are designated as provisional destinations, optimal routes from each of the candidate nodes P11 to P13 to each of the provisional destinations (P21 to P23) are searched as candidate routes, the information of the candidate routes in area A and the candidate routes in area B is linked based on the candidate node information, and total required times (link costs) are calculated. The route search server 30B transmits to the route search server 30E server information of the route search server 30B itself, server information of the route search servers 30A, 30N that provide service to the areas that can be reached, point information of the destination G, information of the candidate nodes P21 to P23, and information of the candidate routes linked by the route search server 30B; and the route search server 30B requests a route search (a search for an en-route route) within area E.

In a process corresponding to the route search request made by the route search server 30B, the route search server 30E performs a process of searching for optimal routes leading to the destination G from each of the candidate nodes P21 to P23 that join area B with area E, and designating these optimal routes as candidate routes. Information of these candidate routes and information of the candidate routes in area B searched by the route search server 30B are linked based on information of the candidate nodes, and the linked candidate route information is transmitted to the route search server 30B that originally made the route search request. The route search server 30B transmits to the route search server 30A the candidate route information and the candidate node information obtained from the route search server 30E. This above-described process of the route search server 30B is performed in the same manner for the route search servers 30N and the like of the other areas that can be reached.

### (Sequence of candidate route search by route search server 30B when destination G is in area B)

If the destination G is a point within area B, the route search server 30B searches for optimal routes leading to the destination G from each of the candidate nodes P11 to P13 that link area A and area B, designates these optimal routes as candidate routes, links on the basis of the candidate node information the candidate routes in area A, and transmits the linked candidate route information to the route search server 30A. The process sequence in this case is the same sequence as that described with reference to FIG. 12.

When the route search servers 30B and the like, having been requested to search for candidate routes in the en-route areas, then transmit the candidate route search results to a route search server of another area, limiting the number of candidate routes and the route search server that receives the transmission, as described below, makes it possible to simplify the process of determining a recommended route, and inhibit a cooperative candidate route search process.

For example, when the route search servers which have these areas as service providing areas request that another route search server search for a candidate route through the local area, information of the candidate route to the candidate node in this area is correlated with the candidate node and transmitted, and the other route search server that has received the candidate route search request links on the basis of the candidate node the candidate route in the local area obtained in the candidate route search, uses only the candidate route which minimizes the link cost of the linked candidate routes, and transmits only information of the linked candidate route which minimizes link cost to the route search server that originally made the request. The number of candidate routes can thereby be minimized and determining the recommended route is made easier.

When the route search servers which have these areas as service providing areas request that another route search server search for a candidate route through the local area and the route to the local area passes through a predetermined number of areas, the search result of candidate routes in the local area is transmitted only to the route search server which has the area containing the destination as a service providing area. This prevents the number of en-route areas from increasing unnecessarily. When such a method is used, information of candidate nodes and information of candidate routes to the local area are acquired along with en-route area information and server information of the en-route areas, the number of en-route areas and servers can be determined, and the route search server of the area containing the destination can be specified from the destination information.

When the route search servers which have these areas as service providing areas request that another route search server search for a candidate route through the local area, and also when the route to the local area passes through a predetermined number of areas the link cost from the departure place is a predetermined value or higher, the search result of candidate routes in the local area is transmitted only to the route search server which has the area containing the destination as a service providing area. This minimizes the number of candidate routes, makes determining the recommended route easier, and prevents the number of en-raute areas from increasing unnecessarily.

During this process in a case of passing through a predetermined number of areas to reach the aforementioned local area, the information of the candidate route search result transmitted to the route search server which has the area containing the destination as a service providing area may be information of candidate routes searched in the local area, information indicating whether or not there are candidate routes, or both of these together. It is not absolutely necessary to use a configuration in which the search result of candidate routes in the local area is transmitted to the route search server which has the area containing the destination as a service providing area.

Furthermore, the route search server of such an area may be configured to terminate the candidate route search. This is because the candidate routes searched by the areas route search servers are collected in the route search server (the first route search server 30A) that originally received a route search request from the terminal device 20 and issued the request for candidate route searches in the en-route areas to the other route search servers; therefore, even if there is no response with a candidate route in a certain area, any route missing part of the route from the departure place S to the destination G in the route search server that originally made the request can be excluded from the object of the recommended route determination with no effect. Similarly, in cases in which there is an error in a search for candidate routes in any area, any route missing part of the route from the departure place S to the destination G is excluded from the object of the recommended route.

Furthermore, a restriction can be imposed that the areas which may be en-route be areas that can be reached from the area containing the departure place, as well as being a predetermined number of areas matching conditions set in advance. There are cases, for example, of routes where the geographic region that the route passes through is impassable (entry is forbidden) due to a political situation or other circumstance. Since there is no point in searching for candidate routes which cannot be traversed, such areas are preferably excluded from possible en-route areas. Other possibilities include implementing settings wherein only areas within a predetermined time range or distance range from the area containing the departure place are determined to be possible en-route areas, or settings wherein a predetermined number of high-ranked areas are determined to be possible en-route areas, the areas being ranked in order of shortest movement time or movement distance between candidate nodes linking areas together. It is also possible to limit the number of en-route areas among all of the routes from the departure place S to the destination G to a predetermined number. When a route search request is transmitted, it is preferable that the user of the terminal device 20 be able to selectively set which limit will be utilized and what the limit number will be (the number of en-route areas, and the number of route search servers) from among these limits as desired.

### (Sequence of candidate route search of route search server 30E when destination G is in area E)

In FIG. 2, since the destination G is a point within area E, the route search server 30E which has area E as a service providing area receives the same route search request as when the route search server 30B received a request from the route search server 30A. In response to this request, the route search server 30E extracts candidate nodes that link area A and area E, searches for optimal routes leading from each of the candidate nodes to the destination G, and designates these optimal routes as candidate routes. This candidate route information is linked with information of candidate routes in area A from the departure place S in area A to the candidate nodes linking area A and area E (included in the route search request information transmitted from the route search server 30B), creating new candidate route information, which is transmitted to the route search server 30A that originally made the route search request.

The route guiding system is configured so that, as previously described, the route search server 30E which has the area containing the destination G as a service providing area is requested to search for candidate routes from the candidate nodes to the destination G by the route search server 30A associated with the departure place S and the route search servers 30B and the like, which have the areas which may be en-route as service providing areas; therefore, information of the candidate routes is transmitted (a response made) to the route search servers that originally made the request. However, the configuration is not limited to this example.

In another possible configuration, the request to search for candidate nodes to the destination G includes the transmission of server information of the route search server 30A with the departure place and the route search servers 30B and the like of the en-route areas, information of their respective candidate nodes, and information of candidate routes to the candidate nodes searched by each of the route search servers (information of the areas and links representing routes in the en-route areas); therefore, the route search server 30E can identify the route search server 30A associated with the departure place S, and the route search server 30E therefore performs a search and directly transmits to the route search server 30A associated with the departure place S (without diverting through the route search server 30B of an en-route area) information (candidate route information) of routes linked with candidate routes of the area of the route search server that originally made the route search request. This also applies to route search servers of areas that do not contain the destination G.

### (Process of route search server 30A when departure place S and destination G are in the same area)

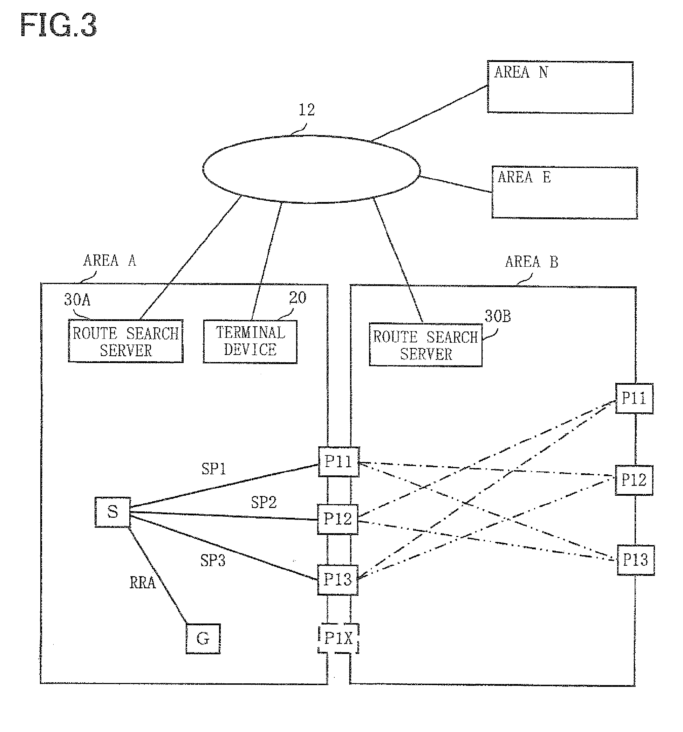

As previously described, when the departure place S and the destination G are both points within area A (the local area), the route search server 30A performs a route search in area A in addition to requesting a route search from the route search servers 30B and the like of en-route areas. Specifically, the route search server 30A searches for optimal routes in area A from the departure place S to the destination G and stores the searched optimal routes as candidate routes. FIG. 3 is a diagram showing a summary of the process of the route guiding system 10 when the departure place S and the destination G are both in area A.

The route search server 30A also extracts candidate nodes with other areas which may be en-route and searches for optimal routes between the extracted candidate nodes and the departure place S. The searched optimal routes are designated as candidate routes and transmitted to the route search servers 30B and the like of the other areas.

The route search server 30B has received a route search request as an en-route area from the route search server 30A, and since the route search server 30A is also in an area that can be reached, the route search server 30B designates each of the candidate nodes P11, P12, P13 linking area B and area A as provisional destinations, searches for optimal routes within area B leading to each provisional destination from each of the candidate nodes P11, P12, P13 received from the route search server 30A, designates each of the searched optimal routes as candidate routes, links on the basis of the candidate node information the candidate routes to the candidate nodes P11, P12, P13 from the departure place S searched by the route search server 30A, and transmits this information to the route search server 30A.

FIG. 3 shows a summary of such a process. The candidate nodes P11, P12, P13 and the candidate nodes P11, P12, P13 that have been designated as provisional destination are shown in different positions in FIG. 3 for purpose of convenience, but these are actually the same points, and the candidate routes in area B searched in the route search server 30B include six routes: the routes from P11 to P12 and P13, the routes from P12 to P11 and P13, and the routes from P13 to P11 and P12. These candidate routes are linked with the candidate routes in area A from the departure place S to the candidate nodes P11, P12, P13, therefore resulting in candidate routes which move from the departure place S through the candidate node P11 and area B to the candidate nodes P12, P13, and then lead from the candidate nodes P12, P13 to the destination G in area A, for example.

If there are areas other than area B which may be en-route and which can be reached, the same process as that of the route search server 30B is performed in the route search servers of these areas as well. After obtaining the candidate routes from each of the route search servers 30B and the like, the route search server 30A compares the candidate routes that lead from the departure place S to the destination G within area A with the candidate route that lead from the departure place S and pass through other en-route areas (area B, and the like) to reach the destination G in area A, designate the candidate route having the lowest cost as the recommended route, and transmits this route to the terminal device 20. If a candidate route that passes through another area has the lowest cost, this route will be the recommended route. Such cases often occur when a certain area has large depressed portions in its geographical shape. In a conventional route search, when the departure place S and the destination G are within one area, only optimal routes within that area are searched, and routes through other areas are therefore not considered.

The information of candidate routes in the areas searched by the route search servers includes map data ranges including the routes, node sequences of road networks and traffic networks that make up the routes, link sequence data, route guidance data (audio guidance data and text display data) in right-left turning nodes and transfer nodes, traffic lines and traffic means utilized, required times between nodes, and other data. The information of these candidate routes is transmitted from the other route search servers to the route search server 30A of area A, linked with each of the candidate nodes, and compiled with the total candidate route information from the departure place S to the destination G.

The route guidance data in the other areas may be transmitted without further modification from the route search servers to the route search server 30A of area A, but when then terminal device 20 has moved to an en-route area, link information for requesting route guidance from the route guiding system that provides service to this area may be added as information of candidate route in this area to the information of the node sequences, link sequences, and link costs of the candidate routes. This makes it possible, if the terminal device 20 is capable of roaming, to request route guidance from the corresponding route search server after moving to this area and to acquire the necessary detailed route guidance information even if route guidance information in each area has not been acquired in advance.

It is thereby possible for a terminal device 20 that has acquired recommended route information from the route search server 30A to request route guidance and to receive route guidance in the area from the route search server which has the area where the terminal device 20 is positioned as a service providing area.

For example, when the terminal device 20 requests route guidance of the recommended route, the terminal device 20 can request route guidance from the route search server 30A and receive route guidance within area A on the basis of link information for server access included in the information of routes in area A included in the recommended route information while the terminal device 20 is positioned in area A. When the terminal device 20 has moved to another area, e.g., the en-route area B, the terminal device 20 can similarly request route guidance from the route search server 30B and receive route guidance within area B. Similarity, when the terminal device 20 has moved to area E where the destination G is located, the terminal device 20 can request route guidance from the route search server 30E and receive route guidance within area E.

As described above, the route search server 30A obtains candidate route information of the linked candidate routes in each of the areas from the route search servers 30B, 30E, and the like of the areas which may be en-route, compares the cost of these candidate routes, and determines a recommended route that minimizes the cost. There are cases in which the determined recommended route passes through one or any number of en-route areas from the departure place S to the destination G, and there are also cases in which the determined recommended route moves from the area where the departure place S is located to the area where the destination G is located without passing through any en-route areas. Even when the departure place S and the destination G are in the same area, there are any number of routes leading from the departure place S to the destination G within this area, as well as routes which lead from the departure place S to the destination G by passing through one or more en-route areas. The terminal device 20 acquires map information of the area in each area and displays a map for the recommended route from the departure place S to the destination G on the basis of the recommended route information acquired from the route search server 30A, and the terminal device 20 can receive route guidance while displaying the recommended route on the map.

When the route search server 30B extracts a candidate node PX that is different from the candidate nodes P11 to P13 received from the route search server 30A, preferably, the route search server 30B sends point information of the candidate node PX to the route search server 30A, requests an additional search for an optimal candidate route from the departure place S to the candidate node PX, acquires the link cost (required time) of this candidate route from the route search server 30A, links the link cost with the candidate routes in area B, and adds this new candidate route to the other candidate routes to determine an optimal recommended route when the recommended route is determined in the route search server 30A.

The candidate nodes shown in FIGS. 2 and 3 are shown as certain specified points, but when area A and area B are adjacent by land and the movement means is automobile or railroad, there are cases in which the candidate nodes linking area A and area B are points in the area border and can be specified as point information of candidate nodes as shown by P11 to P13 in FIG. 2; however, this is not always the case.

For example, when the route uses an aircraft or a boat as movement means between areas, a node in area A and a node in area B, which are nodes at both ends of a link using an aircraft or a boat as movement means between areas, will be candidate nodes. When the departure place S is in area A and the destination G is in area B as in FIG. 2, the point information of the candidate node sent from the first route search server 30A in area A to the route search server 30B in area B is an airport or a harbor which is the destination node of the aircraft link or boat link, and the point information of the candidate node of the route search server 30A of area A is an airport or harbor which is the departure place node of the aircraft link or boat link. In this case, as shall be apparent, the required time of the aircraft link or boat link is added to the total cost of the recommended route.

When the terminal device 20 requests a route search from the route search server 30A, there are cases in which the destination is determined by retrieving a desired facility located in an area other than area A, e.g., a hotel, a museum, an art gallery, or another tourist facility; or various sports stadiums, event sites, or the like. In this case, to specify the destination G located in the range of B in which the route search server 30B provides service, the point information of the destination G must be specified in the route search server 30A. In this case, the route search server 30A does not need to store map data of area B, and the route search server 30A need only be configured to acquire point information of the facility name, or the like within the range of area B by POI retrieval. The POI information can be acquired from the POI information distribution server 50 (see FIG. 1) and stored in the POI information database 34A.

The POI information database 34A of the route search server 30A also includes information of primary facilities such as airports and harbors as POI information of countries and areas other than area A, and the route search server 30A can therefore extract airports and harbors near the indicated destination G as candidate nodes.

### (Determination of possible en-route areas in route search server)

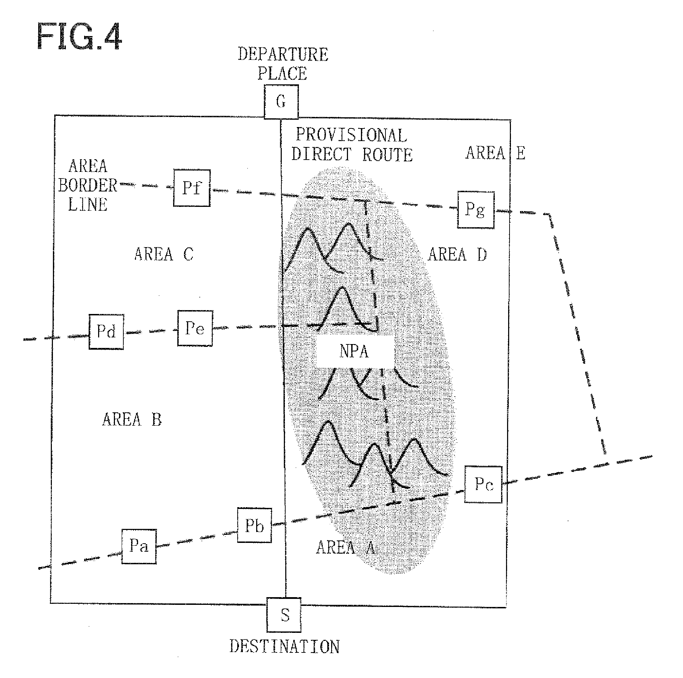

The following is a description of one method for distinguishing an area which may be en-route (an en-route area) in a route search server which has a certain area as a service providing area, e.g., in the route search server 30A which has area A as a service providing area. FIG. 4 is diagram showing a summary of the sequence for distinguishing en-route areas. The route search server 30A sets a direct route from the departure place S to the destination G as a provisional route and determines which areas are adjacent to the provisional route as shown in FIG. 4. In the example of FIG. 4, area B, area C, area D, and area E are areas adjacent to the direct route (a provisional route) leading from the departure place S to the destination G.

The route search server 30A extracts candidate nodes P1 to P8 that link the en-route areas B to E, and requests a route search from the route search servers 30B and the like of the areas as was described with reference to FIGS. 2 and 3. In FIG. 4, since the candidate nodes linking area A and the en-route areas include nodes of air routes and sear routes, candidate nodes between areas that are not directly geographically adjacent are extracted as well. Having received a route search request from the route search server 30A, the route search servers 30B, and the like perform the route search process described above, the results are transmitted to the route search server that originally requested the searches, and ultimately the information of a11 the candidate routes passing through the areas is collected in the route search server 30A.

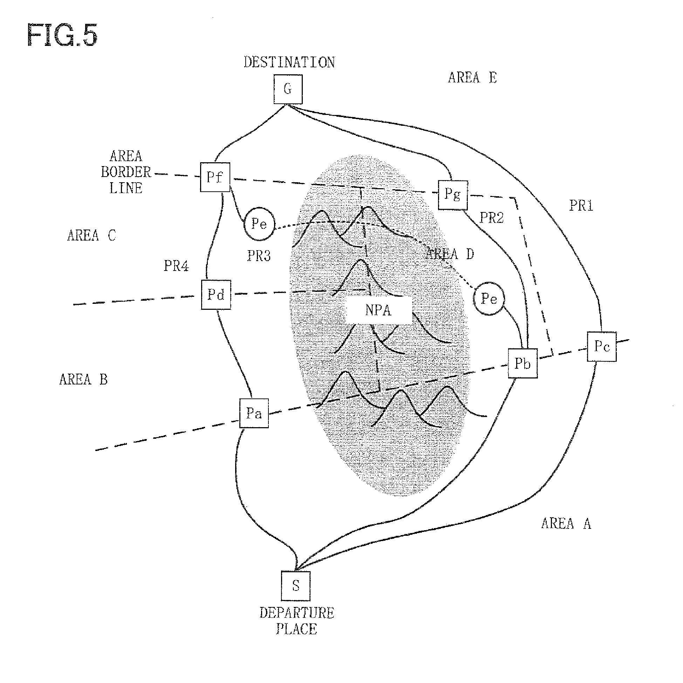

FIG. 5 shows examples of candidate routes searched in this manner. In FIG. 5, a candidate route RR1 is a route which leads from a departure place S in area A through a candidate node Pc with area E to a destination G in area E, and a candidate route RR2 is a route which leads from the departure place S in area A through a candidate node Pb with area D to a candidate node Pg between area D and area E, and then leads from the candidate node Pg of area D to the destination G in area E. Similarly, a candidate route RR4 is a route which leads from a departure place S in area A through a candidate node Pa with area B to a candidate node Pd between area B and area C, then moves into area B and leads from the candidate node Pd to a candidate node Pf between area C and area E, and moves into area C and leads from the candidate node Pf to the destination G in area E. Specifically, the candidate route RR2 is a candidate route which passes through one area D, and the candidate route RR4 is a candidate route which passes through two areas, area B and area C.

A candidate route RR3 is a route which links areas C and D together by a candidate node Pe. There are cases of routes, such as this route, where a geographic region through which the route passes is an impossible en-route area due to some circumstances (the entry-forbidden area NPA in FIGS. 4 and 5). Since there is no point to searching for candidate routes which cannot be traversed, even if there is a possible en-route area between area C and area D which thus cannot be traversed, this area is preferably excluded from the en-route areas. Specifically, the route search server of area C is preferably excluded from the route search server of area D, and the route search server of area D preferably excludes the route search server of area C so that the two servers do not request route searches of en-route areas from each other.

When en-route areas are determined including areas that are not geographically adjacent but adjacent by air routes or sea routes, there are countless areas which may be en-route, and it is a fair assumption that the route search process will exceed the server's processing capability. In view of this, searches for en-route routes may be requested of the route search servers of all the areas determined to be passable by the route search server 30A, but it is preferable to set the limit that only areas within a predetermined time range or distance range from area A are determined to be areas which may be en-route.

Another possible option is that all the route search servers of areas determined to be passable by the route search server 30A be ranked in order of shortest movement time or movement distance between candidate nodes linking areas, and a limit be set that a predetermined number of high-ranked areas be determined to be possible en-route areas. It is also possible to limit the number of en-route areas among all routes from the departure place S to the destination G to a predetermined number. When a route search request is transmitted, it is preferable that the user of the terminal device 20 be able to selectively set which of these limits will be utilized and what the limit number will be (the number of en-route areas, the number of route search servers) from among these limits as desired.

The above description is of a case in which the terminal device 20 transmits a route search request to the route search server 30A associated with the departure place S and the route search server 30A requests a route search from the route search servers 30B to 30N, and the like of areas which may be en-route, but the present invention is not limited to this example. For example, another possible configuration is one wherein the route search server 30A transmits the departure place S, the destination G, information of candidate nodes with the area containing the destination G, and information of candidate nodes in area A from the departure place S to the candidate nodes, to the route search server of the area containing the destination G; and the route search server 30A also transmits the en-route area determination and subsequent processes to the route search server with the destination G, i.e., the route search server 30A transmits a request for a candidate route search in the corresponding areas to the route search servers of areas which may be en-route. In this case, the action of the route search server with the destination can be understood by replacing the departure place S with the destination G and replacing the destination G with the departure place S in the previous description.

According to this configuration, even in cases in which due to some conditions, e.g., political reasons, the route search server which has the area containing the destination as a service providing area G is incapable of transmitting detailed information of the area containing the destination G to the route search server of another area, e.g. the route search server 30A of the area containing the departure place S, it is possible through the route search server with the destination G to acquire information of areas which may be en-route, of the route search servers which have these areas as service providing areas, or the like. Route searches can also be requested in en-route areas via a route guiding mediation server described hereinafter. The route guiding mediation server may set a provisional direct route from the departure place S to the destination G as previously described and determine areas which may be en-route, the server may store connection information for each area (whether or not the area can be reached) and candidate node information, and the server may also thereby acquire the information of servers and areas which may be en-route.

The route search server 30A can acquire information of candidate routes from the departure place S to the destination G from a plurality of route search servers which have the en-route areas determined in the route search server 30A as described above as service providing areas, from these candidate routes the server can provide the route which minimizes the total route cost (required time or required distance) as a recommended route to the terminal device 20, and the server can provide route guidance.

### (Description of detailed configuration and action of route search servers)

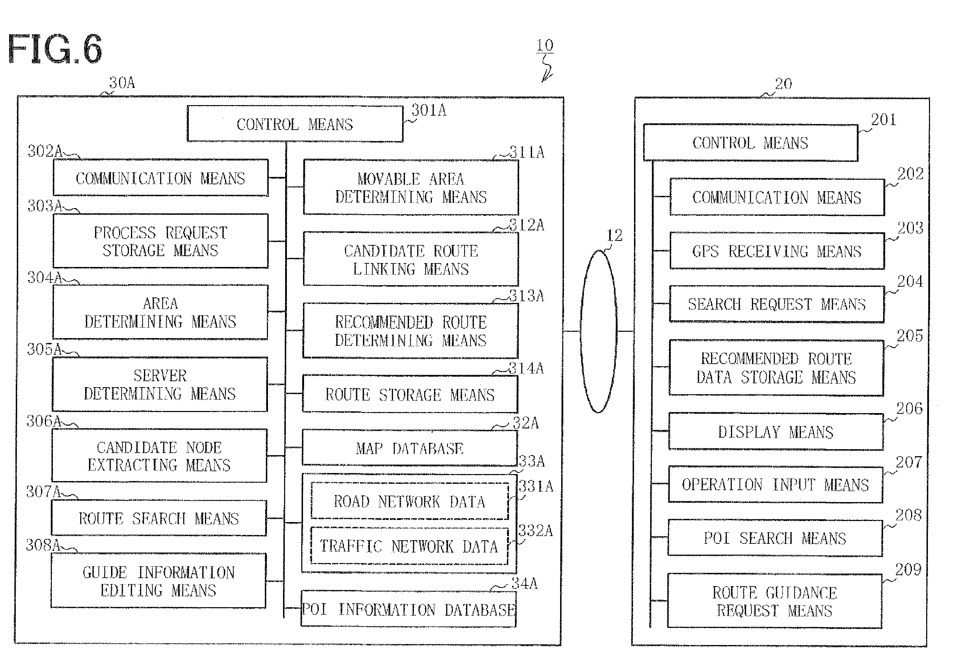

Next, the detailed configuration of the route guiding system according to the present invention will be described. FIG. 6 is a block diagram showing the detailed configuration of the route search server and the terminal device. The terminal device 20 and the route search servers 30A, and the like, which have the respective areas as service providing areas, essentially all have the same configuration, and the route search server 30A which has area A as a service providing area and the terminal device 20 are used as an example in the following description.

The terminal device 20 is a terminal that is able to receive a navigation service, and is provided with control means 201 for collectively controlling the actions of the other components, communication means 202, GPS receiving means 203, route search request means 204, recommended route data storage means 205, display means 206, operation input means 207, POI search means 208, route guidance request means 209, and the like. The operation input means 207 is configured from character input keys, selection keys, cursor keys for selecting setting items and the like on a menu screen displayed on a display screen, and other components.

The route search servers 30A, 30B, ... 30N, etc. essentially have the same configuration as previously described, and in the following description, the same numbers are assigned to the constituent elements of the route search servers while the letters A through N representing the servers are used after the numbers. Constituent elements of the same name have the same function. Each of the route search servers comprises a map database 32A which stores map data, a route search network database 33A which stores road network data 331A and traffic network data 332A for route searches, and a POI information database 34A for storing the names and position information of POIs. In cases in which the route search server 30A has a function for searching for a route using walking or public traffic systems and providing guidance to the terminal device 20, the route search server 30A searches for routes using the road network data 331A and the traffic network data 332A.

The route search server 30A is configured comprising control means 301A for collectively controlling the actions of the other components, communication means 302A, process request storage means 303A, area determining means 304A, service determining means 305A, candidate node extracting means 306A, route search means 307A, guide information editing means 308A, movable area determining means 311A, candidate route linking means 312A, recommended route determining means 313A, route storage means 314A, and other components.

### (Description of en-route areas, candidate nodes, and candidate routes)

Hereinbelow, the example shown in FIG. 5 is used as a reference to describe the actions of the route search server 30A and the route search servers 30B to 30E. First, the terminal device 20 specifies route search conditions such as the departure place, the destination, and the movement means and transmits a route search request to the first route search server 30A. When the route search server 30A receives the route search request from the terminal device 20, the route search conditions such as point information of the departure place and destination and the movement means are temporarily stored in the process request storage means 303A. The route search server 30A then first determines whether or not the area containing the departure place S and the destination G is the local area. If it is the local area, the server searches for an optimal route from the departure place S to the destination G (a route within area A), searches for a candidate route RRA (see FIG. 3), and temporarily stores the search results in the route storage means 314A.

Next, the area determining means 304A determines areas which may be en-route from the departure place S to the destination G as previously described, and the service determining means 305A determines which route search servers provide service to these areas. At this time, if there are any areas which cannot be reached due to various circumstances, these areas and their route search servers are excluded from the en-route areas and servers. Information of areas which may be en-route and the route search servers is temporarily stored in the process request storage means 303A.
The candidate node extracting means 306A then extracts candidate nodes that link area A and the en-route areas. The route search means 307A searches for optimal routes from the departure place S to the candidate nodes and designates these routes as candidate routes. The candidate route information is temporarily stored with the candidate node information in the process request storage means 303A.

Next, the route search server 30A reads the server information of the departure place S, the destination G, en-route areas, and route search servers, as well as information of candidate nodes and candidate routes stored in the process request storage means 303A, transmits this information to the route search servers 30B to 30E of areas B to E, and requests a search for candidate routes.

### (Action of the route search server 30E (in the case of the candidate route RR1 of FIG. 5) which has received a route search request for en-route areas from the route search server 30A)

The route search server 30E determines whether or not the local area is the area where the destination G is located. Since the local area is the area where the destination G is located in this case, the route search server 30E takes the received information into account to search for an optimal route from the candidate node Pc to the destination G, and transmits to the route search server 30A the calculated optimal route information, route guidance information, and link information for accessing the route search server 30E. This action is the same as the action described with reference to FIG. 12.

### (Action of route search server 30D (in the case of the candidate route RR2 of FIG. 5) which has received an en-route area route search from the route search server 30A)

The route search server 30D determines whether or not the local area is the area where the destination G is located. In this case, the server determines that its area is not where the destination G is located. Next, server information (E, C) of areas that can be reached is acquired from among the "areas which may be en-route and server information thereof (in this example, the areas which may be en-route are B, C, D, and E)" received from the route search server 30A. A candidate route search is then performed in the following manner for areas acquired as being reachable.

First, in a case in which an area that can be reached is area E, when the candidate node Pg which can be reached in area E is acquired, the route search means 307D performs an optimal route search using the candidate node Pg as a provisional destination and the candidate node Pb with area A as a provisional departure place. When a search is made for optimal routes from the provisional departure place Pb to the provisional destination Pg, information pertaining to candidate routes in area A searched by the route search server 30A in area A is associated with the provisional departure place Pb (for example, required times, therefore, this is taken into account when optimal routes are searched and designated as candidate routes. Next, the route search server 30D transmits to the route search server 30E the information of candidate routes (candidate routes within area D) obtained as a result of the route search, information of the candidate routes (candidate routes within area A) to the candidate node Pb received from the route search server 30A, information of the candidate node Pg, the destination G received from the route search server 30A, and the areas which may be en-route and their server information excluding area. D and the route search server 30D.

Based on the information of the candidate node Pg received from the route search server 30D, the information of candidate routes in area A and candidate routes in area D, the destination G, and the server information, the route search server 30E searches for optimal routes from the candidate node Pg to the destination G (because the destination G is a point within area E), designates the optimal routes as candidate routes, and transmits the candidate routes to the route search server 30D. The route search server 30D adds the information of the candidate routes in area E searched by the route search server 30E to the candidate routes in area D searched up to this point, and transmits this information to the route search server 30A.

In addition to the above-described process pertaining to area E, since another area C (the route search server 30C) is also possibly en-route and reachable, the route search server 30D performs the same process with the route search server 30C of area C as the process that was performed with the route search server 30E of area E described above. Specifically, when a candidate node Pe (Pe represents an air route, for example) where area C can be reached from area D is acquired, this candidate node Pe is used as a provisional destination and the candidate node Pb linking area A and area D is used as a provisional departure place to search for optimal routes in area D and designate them as candidate routes. The information of the searched candidate routes, the information of candidate routes from the departure place S in the area to the candidate node Pb received from the route search server 30A, the candidate node information, the destination G received from the route search server 30A, and the areas which may be en-route and their server information except for area D (the route search server 30D) are transmitted to the route search server 30C.

Similarly, the route search server 30D of area D searches for a candidate route RR4 passing through areas B and C from area A, based on a search request for an en-route route from the route search server 30A. This process is repeated by the route search servers 30B to 30E, and a candidate route search that takes into account areas which may be en-route can thereby be performed.

Having acquired information of candidate routes in the other areas, the route search server 30A compares the costs of these candidate routes and determines a recommended route that minimizes the cost. Information of the determined recommended route is transmitted to the terminal device 20, and based on the recommended route information acquired from the route search server 30A, the terminal device 20 can acquire area map information in each area for the recommended route from the departure place S to the destination G, display a map, and receive route guidance while displaying the recommended route on the map.

### (Description of common route search method)

The following is a description of a common search method for routes including movement routes by traffic systems. The route search network databases 33A, 33B and the like of the respective route search servers 30A, 30B and the like store the road network data 331A, 331B and the like for searching for movement routes by walking or automobile and the traffic network data 332A, 332B and the like for searching for movement routes that use public traffic systems. The respective route search means 307A, 307B and the like refer to the route search network databases 33A, 33B and the like to search for routes by walking or automobile or routes that use both walking and traffic systems.

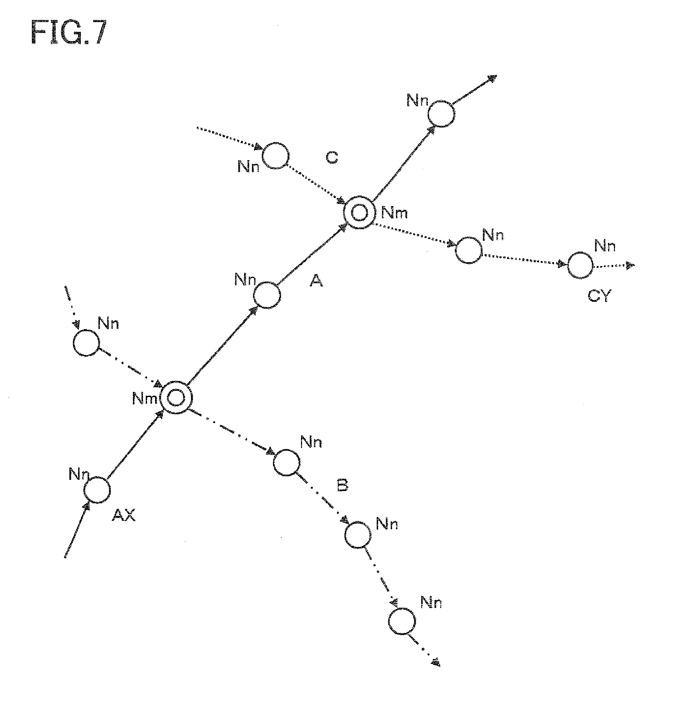

The road network data 331A, 331B and the like is configured as follows. For example, in a case in which the road consists of roads A, B, and C as shown in FIG. 7, the end points, intersection points, turning points, and other such features of the roads A, B, and C are designated as nodes, the roads connecting the nodes together are represented as links having direction, and the road is configured from node data (latitude and longitude of nodes), link data (link numbers), and link cost data in which the data is the link cost of the links (the link distance or the required time needed in order to travel the links).

Specifically, in FIG. 7, the letters Nn (the symbol o) and Nm (the symbol ⊚) indicate nodes, and Nm (the symbol ⊚) indicates an intersection point between roads. Links having direction and connecting nodes together are shown as arrow lines (solid lines, dotted lines, and double-dotted lines). Among links, there are links which indicate upward and downward sloping of roads, but for the sake of simplifying the drawing in FIG. 7, only links of arrow directions are shown.

In cases in which a route search is performed using this manner of road network data as a route search database, the links connecting from the departure place node to the destination node are traversed, their link costs are totaled, the route which minimizes the total link cost is searched, and guidance is provided. Specifically, in a case in which the departure place is the node AX and the destination is the node CY in FIG. 7 and a route search is performed, road A is traveled from node AX, a right turn is made at the second intersection point onto road C, the links leading to node CY are traversed in sequence, the link costs are totaled, the route which minimizes the total value of link costs is searched, and guidance is provided.

No other routes leading from node AX to node CY are shown in FIG. 7, but since other such routes actually do exist, multiple routes whereby node CY can be reached by node AX are similarly searched, and of these routes, the route which minimizes the link cost is determined to be the optimal route. This method is performed by a conventional method known as the Dijkstra method, for example.

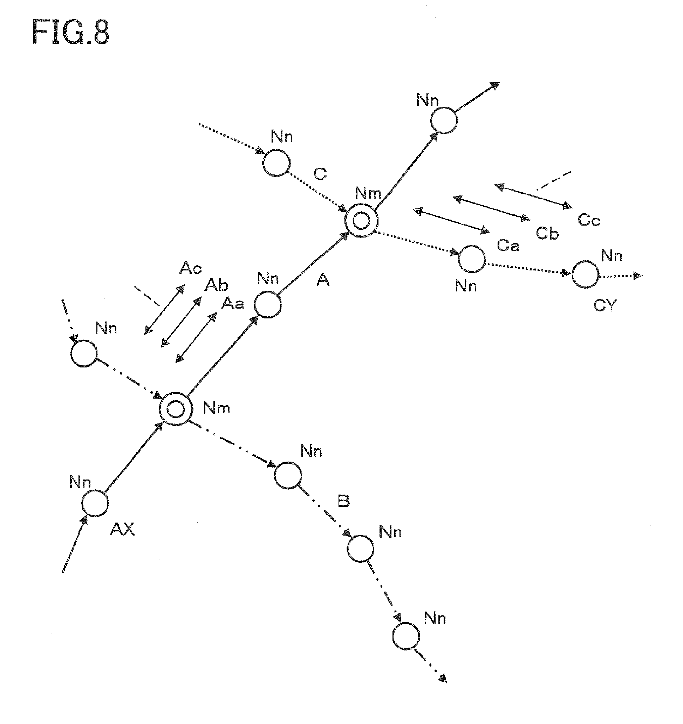

The traffic network data 332A, 332B for conducting a route search of traffic systems is configured as follows. For example, in a case of the traffic lines A, B, and C such as is shown in FIG. 8, the stations provided at the traffic lines A, B, and C (airports in aircraft lines) are designated as nodes, the sections joining the nodes together are represented as links having direction, and node data (latitude and longitude) and link data (link numbers) are designated as network data. In FIG. 8, the letters Nn (the symbol o) and Nm (the symbol ⊚) indicate nodes, where Nm (the symbol ⊚) indicates a connection point (a transfer station or the like) of a traffic line, and links having direction and connecting nodes together are indicated by arrow lines (solid lines, dotted lines, and double-dotted lines). Among links, there are links which indicate upward and downward sloping of traffic lines, but for the sake of simplifying the drawing in FIG. 8, only links of arrow directions are shown.

However, the link costs of a traffic network are fundamentally different from those of a road network. Specifically, link costs in a road network have been fixed and static, whereas in a traffic network, there are numerous trains and aircraft traveling the traffic lines as shown in FIG. 8 (the routes of individual trains, aircraft, and the like are hereinbelow referred to as "traffic means"). There are cases in which the departure time from a node and the arrival time at the next node are established for each traffic means (defined as time schedule data and operation data) and individual routes are not necessarily linked at adjacent nodes. For example, there are cases such as express trains and local trains. In such cases, a plurality of different links exist on the same traffic line, and there are cases in which the required times between nodes differ depending on the traffic means.

In the traffic network shown in FIG. 8, there is a plurality of traffic means (routes) Aa to Ac ... on the same link of the traffic line A, and a plurality of traffic means (routes) Ca to Cc ... on the traffic line C. Therefore, in an operation network of a traffic system, unlike a simple road network, the quantity of data including nodes, links, and link costs is proportionate to the total number of traffic means (routes of individual aircrafts, trains, and the like), unlike a simple road network.

To search for a route from a certain departure place to a certain destination using this manner of traffic network data, all of the traffic means which can be used (ridden) to reach the destination from the departure place must be searched and a traffic means that conforms to the search conditions must be specified.

For example, in FIG. 8, in a case in which a route search is performed wherein a specified departure time is designated with the node AX of the traffic line A as the departure place and the node CY of the traffic line C as the destination, all of the traffic means that depart at or after the departure time from among the traffic means Aa to Ac ... operating on the traffic line A are selected in sequence as routes at the time of departure. Based on the arrival time at the connection node on the traffic line C, a search is conducted of a combination of all the traffic means from the arrival time onward which can be boarded at the connection node from among the traffic means Ca to Cc ... operating on the traffic line C, the required times, number of boardings, and other parameters of the routes are totaled, and guidance is provided.

Using this manner of network data, the route search servers 30A, 30B and the like search a plurality of candidate routes from the departure place to the destination in accordance with the route search conditions and designate the results as candidate routes. If the departure time from the departure place is specified in the route search conditions, the arrival time at the destination is included in the guidance route data, or if the arrival time at the destination is specified, the departure time from the departure place for arriving at the destination at the specified time is included in the route guidance data.

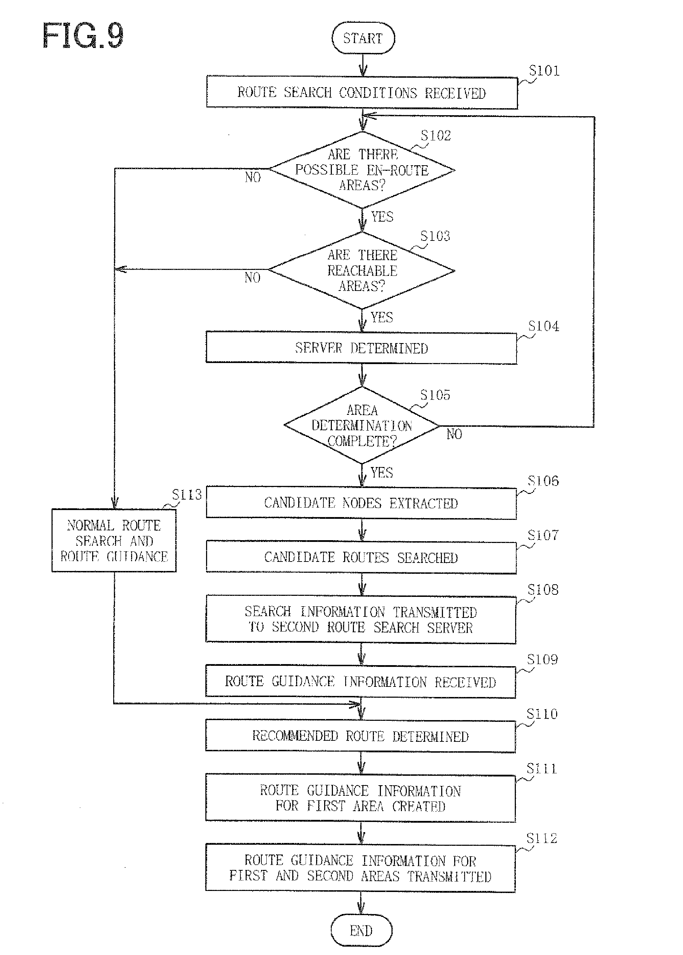

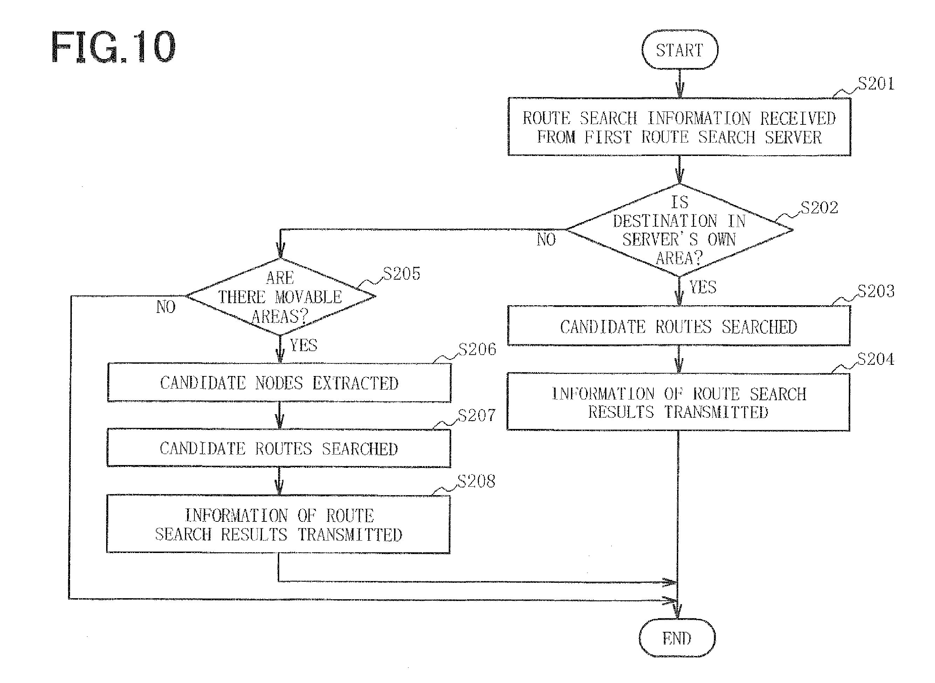

Next, the operation sequence of the route guidance system according to the example of the present invention will be described in detail with reference to the flowcharts shown in FIGS. 9 and 10. FIG. 9 is a flowchart showing the operation in the route search server with the departure place S (e.g., the route search server 30A shown in FIGS. 2 and 3) of the route guiding system according to the example of the present invention. FIG. 10 is a flowchart showing the operation in the route search servers (e.g., the route search servers 30B and the like of FIGS. 2 and 3) in en-route areas of the route guiding system according to the example of the present invention.

### (Description of the operation sequence of the route search server with the departure place)

In step S101, the first route search server 30A receives a route search request including the departure place, the destination, and other route search conditions from the terminal device 20. The first route search server 30A temporarily stores the received route search conditions in the process request storage means 303A. Next, in step S102, the area determining means 304A determines a predetermined number of en-route areas which are en-route or which may be en-route from the departure place S to the destination G, and determines which route search servers 30B and the like provide service to these areas.

In the process of step S102, if there are no possible en-route areas, the sequence advances to the process of step S113, and the normal route search and route guidance are performed. The term "normal route search and route guidance" used herein refers to the process of searching for an optimal route in area A and providing guidance in the route search server 30A if the departure place S and the destination G are within the same area (within the range of area A), or to the performing of a route search and route guidance as described referring to FIG. 12 if the departure place S and the destination G are points within different areas.

In the process of step S102, if there are any possible en-route areas, the movable area determining means 311A determines if the possible en-xaute areas are areas that can be reached in the process of step S103. If there are no movable areas, the sequence advances to the process of step S113, and the normal route search and route guidance are performed. If there are movable areas, in the process of step S104, the service determining means 305A determines which route search servers 30B and the like have these possible en-route and movable areas as their service providing areas. Next, in the process of step S105, a determination is made as to whether or not the determination of the en-route areas and movable areas is complete, and if it is not complete, the sequence returns to the process of step S102 and the determination process is repeated for other possible en-route areas. If the area determination is complete, the sequence advances to the candidate node extraction process of step S106. The area determination is complete when areas and route search servers either of a predetermined number or within a predetermined distance range have been determined as previously described. The method for determining possible en-route area is as described previously.

In the process of step S106, the candidate node extracting means 306A extracts candidate nodes (see Pa to Pg in FIG. 5) linking area A and the possible en-route areas. Next, in step S107, the route search means 307A searches for optimal routes to the candidate nodes extracted by the candidate node extracting means 306A, designates these as candidate routes, correlates the routes with the information of the candidate nodes, and temporarily stores the candidate route information in the route storage means 314A. At this time, if the departure place S and the destination G are both points within area A, the candidate node extracting means 306A searches for optimal routes from the departure place S to the destination G, designates these routes as candidate routes within area A, and temporarily stores the routes in the route storage means 314A.

When the candidate route search is complete, in step S108, the route search server 30A transmits candidate route search requests of each of the areas to the respective route search servers 30B and the like determined by the service determining means 305A. This route search request includes transmission of the server information of the route search servers 30B and the like specified (determined) by the service determining means 305A, the destination, the information of the candidate nodes leading to other areas, and the information of candidate route leading to the candidate nodes (including at least information of the required times (link costs)).

When the route search server 30A transmits a route search request to the route search servers 30B and the like, the sequence advances to the process of step S109, and the route search server 30A waits to receive route search results from the route search servers 30B and the like that have been requested to conduct a route search. The process sequence in the route search servers 30B and the like is described hereinafter with reference to the flowchart of FIG. 10. When information of the candidate routes in each of the areas is received from the route search servers 30B and the like, in the process of step S110, the recommended route determining means 313A of the route search server 30A determines the candidate route which minimizes the link cost (required distance or required time) to be the recommended route from among all the candidate routes leading from the departure place S through the respective en-route areas to the destination G (see the candidate routes RR1 to RR4 of FIG. 5).

When the recommended route determining means 313A determines a recommended route, if the departure place S and the destination G are in area A and a search is conducted for candidate routes in area A from the departure place S to the destination G, these candidate route are compared with the candidate routes RR1 to RR4 and the like passing through the en-route areas received from the route search servers 30B and the like, and the candidate route which minimizes the link cost is determined as the recommended route. Therefore, even when the departure place S and the destination G are in the same area, in cases in which a candidate route that leads to the destination G after heaving an en-route area minimizes the link cost, guidance is provided using this candidate route as the recommended route (see FIG. 3).

When the recommended route is determined in step S110, the guide information editing means 308A creates route guidance information of the recommended route within the first area, i.e., within the area to which the route search server 30A provides service, and when the recommended route is a route that passes through another en-route area, the route guidance information created in step S111 and the route guidance information providing guidance for the route in the en-route area are linked in step S112, and the linked information is edited and transmitted to the terminal device 20. As previously described, the route guidance information includes map data ranges including the recommended route, node sequences of road networks and traffic networks that make uρ the routes, lint sequence data, route guidance data (audio guidance data and text display data) in right-left turning nodes and transfer nodes, traffic lines and traffic means utilized, required times between nodes, and other data. When the terminal device 20 has moved to an en-route area, the link information for requesting route guidance from the route search server providing service to that area is added to information of the recommended route in that area, which is the information of the node sequence, link sequence, and link cost of the recommended route.

### (Description of the operation sequence of the route search server in the en-route area)

The second route search servers 30B and the like that have been requested to search for candidate routes in the en-route areas by the first route search server 30A perform a candidate route search according to the sequence of the flowchart shown in FIG. 10. Specifically, in step S201, a route search request is received from the first route search server 30A. The route search request includes the server information of the route search servers 30B and the like. specified (determined) by the service determining means 305A, the destination, information of the candidate routes leading to the areas, and information of the candidate routes to the candidate nodes (including at least the required time (link cost) information).

Hereinbelow is a description of a flowchart as a specific example of the action of the route search server 30B (area B) when the destination G is a point within area E. When a route search request is received, the route search server 30B determines in step S202 whether or not the destination G is a point within area B (within the local area). Since the destination G here is a point within area E and not a point within area B, the determination in step S202 is "NO" and the sequence advances to the process of step S205. It is the determination process of the route search server 30E where the destination G is determined to be in the local area, and this process is described hereinafter as the action of the route search server 30E .

In the process of step S205, based on the en-route areas and server information received from the route search server 30A, the movable area determining means 311B determines whether or not the en-route areas are areas that can be moved to from area B. If there are no movable areas, the process is ended because area B cannot be an en-route area, and a reply to this effect is sent to the route search server 30A.

If there is even one movable area, the route search server 30B extracts candidate nodes with area B through the candidate node extracting means 306B in the process of step S206. When the candidate node is extracted, in the process of step S207, each of the extracted candidate nodes is designated as a provisional destination, each of the candidate nodes is designated as a provisional departure place on the basis of information of the candidate nodes with area B received from the route search server 30A, and candidate routes from the provisional destinations to the provisional departure places are searched (see FIG. 2).

The information of the candidate routes within area B searched in the process of step S207 is transmitted in the process or step S208 from the route search server 30B to an en-route route search server, which in this case is the route search server 30E of area E where the destination G is located, and a search for candidate routes in area E is requested.

Within the process pertaining to the route search request received from the route search server 30B, the route search server 30E performs a process of searching for optimal routes to the destination G from each of the candidate nodes P21 to P23 connecting area B and area E, and designating these routes as candidate routes. This candidate route information is linked with the information of candidate routes in area B searched by the route search server 30B on the basis of the candidate node information, and the linked candidate route information is transmitted to the route search server 30B that originally made the route search request. The route search server 30B transmits the candidate route information and candidate node information obtained from the route search server 30E, ending the process.

Since the route search server 30E receives a request to search for candidate routes in area E from the route search server 30A, similar to the route search server 30B, the route search server 30E determines if the destination G is within the local area in the process of step S202 in FIG. 10, searches for optimal routes from candidate nodes to the destination G on the basis of information of candidate nodes received from the route search server 30A upon the request for a candidate route search (candidate nodes between area A and area E) in the process of step S203, and ends the process by transmitting the candidate route information to the route search server 30A in the process of step S204. This action of the route search server 30E is the same action as is described with reference to FIG. 12.

### [Embodiment 2]

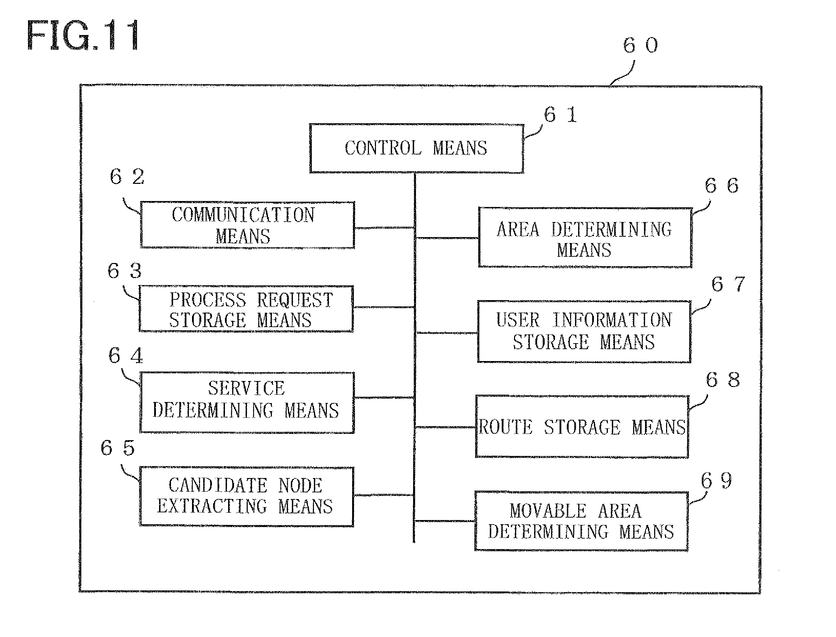

The process described above is an example of a process performed by the cooperation of route search servers that provide service to different areas, but the same process can be performed via a route guiding mediation server. FIG. 11 is a block diagram showing the configuration of a route guiding mediation server 60 provided in the route guiding system 10 according to Embodiment 2.

The route guiding mediation server 60 shown in FIG. 11 is connected to the route guiding system 10 shown in Fig. 3 via a network; and the route guiding mediation server 60 receives a route search mediation request from the route search servers 30A, 30B, and the like, specifies the route search servers that are needed for the route search and route guidance, mediates the route search request, and provides the results of the route search to the servers that originally made the route search mediation request. The action of the route guiding mediation server 60 is described here using as an example a case in which the process between the first route search server 30A and the second route search server 30B or another server, described referring to FIGS. 2, 3, or the like, is performed via the route guiding mediation server 60.

The route guiding mediation server 60 is configured comprising control means 61, communication means 62, process request storage means 63, service determining means 64, candidate node extracting means 65, area determining means 66, user information storage means 67, route storage means 68, movable area determining means 69, and other components, as shown in FIG. 11. The control means 61 comprises (not shown) a microprocessor, ROM, and RAM, and controls the actions of the other components. The communication means 62 is an interface for exchanging information with the first route search server 30A, the second route search server 30B, or the like via a network,

There is given in the following description an example of a case in which a terminal device 20 sets route search conditions designating a point in area A as the departure place S and a point in area E as the destination G, the terminal device 20 requests a route search taking en-route areas into account from the route search server 30A of the area with the departure place S, and the route search server 30A sends a request to mediate a route search and route guidance to the route guiding mediation server 60.

First, the terminal device 20 specifies the departure place, the destination, the movement means, and other route search conditions and transmits a route search request to the first route search server 30A. Upon receiving a route search request from the terminal device 20, the route search server 30A temporarily stores the point information of the departure place S and destination G, the movement means, and the other route search conditions in the process request storage means 303A. The route search server 30A then transmits to the route guiding mediation server 60 a candidate route search request including information of the terminal device 20, user information, point information of the departure place S and destination G, and the information of the movement means and other route search conditions. The route search server 30A also determines whether or not the area containing the departure place S and the destination G is the local area. If it is the local area, the route search server 30A searches for optimal routes from the departure place S to the destination G (routes within area A), searchers for candidate route (hereinbelow referred to as candidate routes RRA), and temporarily stores the routes in the route storage means 314A (see FIG. 3).

Upon receiving a candidate route search request from the route search server 30A, the route guiding mediation server 60 temporarily stores the route search server 30A that originally made the request, the terminal information, the user information, the point information of the departure place S and destination G, and the movement means and other route search conditions in the user information storage means 67. The area determining means 66 then determines possible en-route areas from the departure place S to the destination G, and the service determining means 64 determines which route search servers provide service to these areas. At this time, if there are areas that cannot be reached due to various circumstances, these areas and their route search servers are excluded from the en-route areas and their servers. The information of the possible en-route areas and their route search servers is temporarily stored in the process request storage means 63.

The description herein presumes that areas B through E have been determined to be possible erx-route areas, similar to the description of Embodiment 1. The method for determining possible en-route areas is the same method as is described in Embodiment 1. Next, the candidate node extracting means 65 extracts candidate nodes connecting area A and the other en-route areas, The route guiding mediation server 60 first transmits information of these candidate nodes to the route search server 30A, searches for optimal routes from the departure place S to the candidate nodes in area A, designates the searched optimal routes as candidate routes, acquires the information of the candidate routes, and temporarily stores the information in the route storage means 68.

When the information of the candidate routes in area A is acquired from the route search server 30A, the route guiding mediation server 60 reads the departure place S, the destination G, the server information of the en-route areas and route search servers, and the information of the candidate nodes and candidate routes stored in the process request storage means 63, transmits all the information to the route search servers 30B to 30E of areas B through E, and requests searches for candidate routes.

The action of the route search servers 30B and the like that have received candidate route search requests from the route guiding mediation server 60 is the same action as is described in Embodiment 1. The information of the candidate routes in the areas searched by the route search servers 30B and the like is transmitted to the route guiding mediation server 60 and temporarily stored in the route storage means 68. The route guiding mediation server 60 links on the basis of the information of the respective candidate nodes the information of candidate routes in the areas stored in the route storage means 68, edits the result into total candidate route information from the departure place S to the destination G, and transmits this information to the route search server 30A.

The route search server 30A, having acquired information of the candidate routes in all the areas via the route guiding mediation server 60, then compares the costs of the candidate routes and determines a recommended route that minimizes the cost. Information of the determined recommended route is transmitted to the terminal device 20; and, based on the recommended route information acquired from the route search server 30A, the terminal device 20 acquires map information of each area in all the areas for the recommended route from the departure place S to the destination G and displays a map, and the terminal device 20 can receive route guidance while displaying the recommended route on the map.

As described in detail above, with the route guiding system according to the present invention, a series of route searches and route guiding services from the departure place to the destination can be smoothly transferred from system to system; areas which may be en-route from the departure place to the destination can be specified; and, when a route passing through a specified en-route area is an optimal route, guidance for this optimal route can be provided.

### [Key to Symbols]

- 10: Route guiding system
- 20: Terminal device
- 30A: Route search server
- 32A: Map database
- 33A: Route search network database
- 34A: POI information database
- 301A: Control means
- 302A: Communication means
- 303A: Process request storage means
- 304A: Area determining means
- 305A: Service determining means
- 306A: Candidate node extracting means
- 307A: Route search means
- 308A: Guide information editing means
- 311A: Movable area determining means
- 312A: Candidate route linking means
- 313A: Recommended route determining means
- 314A: Route storage means
- 331A: Road network data
- 332A: Traffic network data
- 201: Control means
- 202: Communication means
- 203: GPS receiving means
- 204: Search request means
- 205: Recommended route data storage means
- 206: Display means
- 207: Operation input means
- 208: POI search means
- 209: Route guidance request means

## Claims

1. A route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route guiding system **characterized in that**:
each of the route search servers includes information on candidate nodes connecting a local area and each of the other areas, network data and map data within a local area for route searches, and route search means;
a first route search server, which has received a route search request with the departure place and the destination set therein from the terminal device and which has a first area as a service providing area, determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area; and requests a search for candidate routes in the corresponding area;
said second route search server distinguishes whether or not the destination is within the local area, and when the destination is within the local area, the second route search server searches for candidate routes to the destination from the corresponding candidate nodes received from said first route search server and transmits the information of the searched candidate routes to said first route search server, and when the destination is not within the local area, the second route search server designates as provisional departure places the candidate nodes connecting said first area with the local area, designates as provisional destinations candidate nodes connecting the local area with the en-route areas received from said first route search server, searches for candidate routes from the provisional departure places to the provisional destinations, transmits the en-route areas, the route search server information, the candidate node information, and the destination point information to a third route search server which has said en-route areas as service providing areas, requests a candidate route search within a third area, links on the basis of the candidate node information the candidate routes in the third area received from said third route search server with the candidate routes in said local area, and transmits the linked information to said first route search server; and
said first route search server searches for candidate routes in the first area from said departure place to said candidate nodes, and, based on candidate node information, links the candidate routes received from said second route search servers with the candidate routes in the first area, designates these routes as candidate routes from the departure place to the destination, determines the candidate route which minimizes the link cost from the departure place to the destination to be a recommended route, and provides the recommended route to said terminal device.

2. The route guiding system according to claim 1, **characterized in that** when said first route search server requests a search for candidate routes from said second route search server, the first route search server correlates information of candidate routes to said candidate nodes within said first area with the candidate nodes and transmits the information; said second route search server links, on the basis of said candidate node information, the candidate routes in the local area obtained in said candidate route search; and the second route search server uses only the candidate route which minimizes the link cost of the linked candidate route and transmits only information of said linked candidate route which minimizes the link cost to said first or said third route search server.

3. The route guiding system according to claim 1 or 2, **characterized in that** when each of the route search servers which has each of said areas as a service providing area is requested by another route search server to search for candidate routes through the local area and the local area is reached by passing through a predetermined number of areas, the route search server transmits the search results of candidate routes in the local area only to the route search server which has as a service providing area the area where said destination is located.

4. The route guiding system according to claim 2, **characterized in that** when each of the route search servers which has each of said areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has as a service providing area the area where said destination is located.

5. The route guiding system according to claim 1, **characterized in that** said first route search server sets a provisional direct route connecting said departure place and destination; and determines areas included within a predetermined distance from the provisional direct route to be areas which may be en-route.

6. The route guiding system according to claim 5, **characterized in that** said areas which may be en-route are areas to which there exists a possibility of moving from the area where the departure place is located, wherein a predetermined number of these areas meet preset conditions.

7. The route guiding system according to claim 1, **characterized in that** when the departure place and the destination are within said first area, said first route search server searches for optimal routes from said departure place to the destination and designates these routes as candidate routes.

8. Route search servers of areas constituting a route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route search servers **characterized in that**:
said route search server has information of candidate nodes connecting a local area with the other areas, network data and map data of the local area for route searches, and route search means;
a route search server that has received a route search request containing a set departure place and destination from the terminal device determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another route search server which has a determined en-route area as a service providing area, and requests a search for candidate routes in the corresponding area;
said other route search server distinguishes whether or not the destination is within the local area, and when the destination is within the local area, the other route search server searches for candidate routes to the destination from the corresponding candidate nodes received from said first route search server and transmits the information of the searched candidate routes to said first route search server, and when the destination is not within the local area, the other route search server designates the candidate nodes connecting said first area with the local area as provisional departure places, designates candidate nodes connecting the local area with the en-route areas received from said first route search server as provisional destinations, searches for candidate routes from the provisional departure places to the provisional destinations, transmits the en-route areas, the route search server information, the candidate node information, and the destination point information to a third route search server which has said en-route areas as service providing areas, requests a candidate route search within yet another area, links on the basis of the candidate node information the candidate routes in said yet another area received from said third route search server with the candidate routes in said local area, and transmits the linked information to said route search server; and
said route search server searches for candidate routes in the local area from said departure place to said candidate nodes, links the candidate routes received from said other route search servers with the candidate routes in the local area, designates these routes as candidate routes from the departure place to the destination, determines the candidate route which minimizes the link cost from the departure place to the destination to be a recommended route, and provides the recommended route to said terminal device.

9. The route search sever according to claim 8, **characterized in that** when said route search server requests a search for candidate routes from said other route search server, said route search server correlates information of candidate routes to said candidate nodes within said local area with the candidate nodes and transmits the information, said other route search server links on the basis of said candidate node information the candidate routes in the local area obtained in said candidate route search, and the other route search server uses only the candidate route which minimizes the link cost of the linked candidate route and transmits only information of said linked candidate route which minimizes the link cost to said other route search server or to yet another route search server.

10. The route search server according to claim 8 or 9, **characterized in that** when each of the route search servers which has each of said areas as a service providing area is requested by another route search server to search for candidate routes through the local area, and the local area is reached by passing through a predetermined number of areas, the route search server transmits the search results of candidate routes in the local area only to the route search server which has as a service providing area the area where said destination is located.

11. The route search server according to claim 9, **characterized in that** when each of the route search servers which has each of said areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has the area where said destination is located as a service providing area.

12. The route search server according to claim 8, **characterized in that** said route search server sets a provisional direct route connecting said departure place and destination; and determines areas included within a predetermined distance from the provisional direct route to be areas which may be en-route.

13. The route search server according to claim 12, **characterized in that** said areas which may be en-route are areas to which there exists a possibility of moving from the area where the departure place is located, wherein a predetermined number of these areas meet preset conditions.

14. The route search server according to claim 8, **characterized in that** when the departure place and the destination are within said first area, said first route search server searches for optimal routes from said departure place to the destination and designates these routes as candidate routes.

15. A route guiding method in a route guiding system wherein route search servers, each of which including a plurality of service providing areas and having a predetermined area as a service providing area, cooperate with one another to search for an optimal route from a departure place to a destination, both set by a terminal device, and give a guidance for the optimal route; the route guiding method **characterized in that**:
each of the route search servers includes information on candidate nodes connecting a local area and each of the other areas, network data and map data within the local area for route searches, and route search means;
a first route search server which has received a route search request with the departure place and the destination set therein from the terminal device and which has a first area as a service providing area determines a predetermined number of en-route areas which may be en-route in a route leading from the departure place to the destination, transmits a route search request including en-route area information route search server information of the en-route areas, information of candidate nodes connecting the first area and the en-route areas, and point information of the destination to another second route search server which has a determined en-route area as a service providing area, and requests a search for candidate routes in the corresponding area;
said second route search server distinguishes whether or not the destination is within the local area, and when the destination is within the local area, the second route search server searches for candidate routes to the destination from the corresponding candidate nodes received from said first route search server and transmits the information of the searched candidate routes to said first route search server, and when the destination is not within the local area, the second route search server designates the candidate nodes connecting said first area with the local area as provisional departure places, designates as provisional destinations candidate nodes connecting the local area with the en-route areas received from said first route search server, searches for candidate routes from the provisional departure places to the provisional destinations, transmits the en-route areas, the route search server information, the candidate node information, and the destination point information to a third route search server which has said en-route areas as service providing areas, and requests a candidate route search within a third area;
said second route search server links the candidate routes received from said third route search server with the candidate routes in said local area on the basis of the candidate node information, and transmits the linked information to said first route search server; and
said first route search server searches for candidate routes in the first area from said departure place to said candidate nodes, and, based on the candidate node information, links the candidate routes received from said second route search servers with the candidate routes in the first area, designates these routes as candidate routes from the departure place to the destination, determines the candidate route which minimizes the link cost from the departure place to the destination to be a recommended route, and provides the recommended route to said terminal device.

16. The route guiding method according to claim 15, **characterized in that** when said first route search server requests a search for candidate routes from said second route search server, the first route search server correlates information of candidate routes to said candidate nodes within said first area with the candidate nodes and transmits the information, said second route search server links on the basis of said candidate node information the candidate routes in the local area obtained in said candidate route search, and the second route search server uses only the candidate route which minimizes the link cost of the linked candidate route and transmits only information of said linked candidate route which minimizes the link cost to said first or said third route search server.

17. The route guiding method according to claim 15 or 16, **characterized in that** when each of the route search servers which has each of said areas as a service providing area is requested by another route search server to search for candidate routes through the local area and the local area is reached by passing through a predetermined number of areas, the route search server transmits the search results of candidate routes in the local area only to the route search server which has the area where said destination is located as a service providing area.

18. The route guiding method according to claim 16, **characterized in that** when each of the route search servers which has each of said areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has the area where said destination is located as a service providing area.

19. The route guiding method according to claim 16, **characterized in that** said first route search server sets a provisional direct route connecting said departure place and destination, and determines areas included within a predetermined distance from the provisional direct route to be areas which may be en-route.

20. The route guiding method according to claim 19, **characterized in that** said areas which may be en-route are areas to which there exists a possibility of moving from the area where the departure place is located, wherein a predetermined number of these areas meet preset conditions.

21. The route guiding method according to claim 15, **characterized in that** when the departure place and the destination are within said first area, said first route search server searches for optimal routes from said departure place to the destination and designates these routes as candidate routes.

22. A route guiding system wherein route search servers, each of which including a plurality of service providing areas and having a predetermined area as a service providing area, cooperate with one another via a route guiding mediation server to search for an optimal route from a departure place to a destination, both set by a terminal device, and give a guidance for the optimal route; the route guiding system **characterized in that**:
each of the route search servers includes information on candidate nodes connecting a local area and each of the other areas, network data and map data within the local area for route searches, and route search means;
a first route search server which has received a route search request with the departure place and the destination set therein from the terminal device and which has a first area as a service providing area requests candidate route search mediation from said guiding mediation server along with the information of said departure place and destination;
said route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
said second route search server distinguishes whether or not the destination is within the local area, and when the destination is within the local area, the second route search server searches for candidate routes to the destination from the corresponding candidate nodes received from said first route search server and transmits the information of the searched candidate routes to said route guiding mediation server, and when the destination is not within the local area, the second route search server designates the candidate nodes connecting said first area with the local area as provisional departure places, designates candidate nodes connecting the local area with the en-route areas received from said first route search server as provisional destinations, searches for candidate routes from the provisional departure places to the provisional destinations, transmits the en-route areas, the route search server information, the candidate node information, and the destination point information to a third route search server which has said en-route areas as service providing areas, requests a candidate route search within a third area, links the candidate routes in the third area received from said third route search server with the candidate routes in said local area on the basis of the candidate node information, and transmits the linked information to said route guiding mediation server; and
said first route search server searches for candidate routes in the first area from said departure place to said candidate nodes, and, based on the candidate node information, links the candidate routes received from said route guiding mediation server with the candidate routes in the first area, designates these routes as candidate routes from the departure place to the destination, determines the candidate route which minimizes the link cost from the departure place to the destination to be a recommended route, and provides the recommended route to said terminal device.

23. A route guiding mediation server constituting a route guiding system wherein route search servers, each of which including a plurality of service providing areas and having a predetermined area as a service providing area, cooperate with one another via the route guiding mediation server to search for an optimal route from a departure place to a destination, both set by a terminal device, and give a guidance for the optimal route; the route guiding mediation server **characterized in that**:
each of the route search servers includes information on candidate nodes connecting a local area and each of the other areas, network data and map data within the local area for route searches, and route search means;
a first route search server which has received a route search request with the departure place and the destination set therein from the terminal device and which has a first area as a service providing area requests candidate route search mediation from said guiding mediation server along with the information of said departure place and destination;
a second route search server is a route search server which distinguishes whether or not the destination is within the local area on the basis of a candidate route search request from the route guiding mediation server, and when the destination is within the local area, the second route search server searches for candidate routes to the destination from the corresponding candidate nodes received from said route guiding mediation server and transmits the information of the searched candidate routes to said route guiding mediation server, and when the destination is not within the local area, the second route search server designates the candidate nodes connecting said first area with the local area as provisional departure places, designates candidate nodes connecting the local area with the en-route areas received from said first route search server as provisional destinations, searches for candidate routes from the provisional departure places to the provisional destinations, transmits the en-route areas, the route search server information, the candidate node information, and the destination point information to a third route search server which has said en-route areas as service providing areas, requests a candidate route search within a third area, links on the basis of the candidate node information the candidate routes in the third area received from said third route search server with the candidate routes in said local area, and transmits the linked information to said route guiding mediation server;
said first route search server is a route search server which searches for candidate routes in the first area from said departure place to said candidate nodes, and, based on the candidate node information, links the candidate routes received from said route guiding mediation server with the candidate routes in the first area, designates these routes as candidate routes from the departure place to the destination, determines the candidate route which minimizes the link cost from the departure place to the destination to be a recommended route, and provides the recommended route to said terminal device; and
said route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area.

24. The route guiding mediation server according to claim 23, **characterized in that** when said first route search server requests a search for candidate routes from said route guiding mediation server, the first route search server correlates information of candidate routes to said candidate nodes within said first area with the candidate nodes and transmits the information, said second route search server links on the basis of said candidate node information the candidate routes in the local area obtained in said candidate route search, and the second route search server uses only the candidate route which minimizes the link cost of the linked candidate route and transmits only information of said linked candidate route which minimizes the link cost to said route guiding mediation server.

25. The route guiding mediation server according to claim 23 or 24, **characterized in that** when each of the route search servers which has each of said areas as a service providing area is requested by another route search server to search for candidate routes through the local area and the local area is reached by passing through a predetermined number of areas, the route search server transmits the search results of candidate routes in the local area only to the route search server which has the area where said destination is located as a service providing area.

26. The route guiding mediation server according to claim 24, **characterized in that** when each of the route search servers which has each of said areas as a service providing area is requested by another route search server to search for candidate routes through the local area, the local area is reached by passing through a predetermined number of areas, and the link cost from the departure place is equal to or greater than a predetermined value; the route search server transmits the search results of candidate routes in the local area only to the route search server which has the area where said destination is located as a service providing area.

27. The route guiding mediation server according to claim 23, **characterized in that** said route guiding mediation server sets a provisional direct route connecting said departure place and destination, and determines areas included within a predetermined distance from the provisional direct route to be areas which may be en-route.

28. The route guiding mediation server according to claim 27, **characterized in that** said areas which may be en-route are areas to which there exists a possibility of moving from the area where the departure place is located, wherein a predetermined number of these areas meet preset conditions.

29. The route guiding mediation server according to claim 23, **characterized in that** when the departure place and the destination are within said first area, said first route search server searches for optimal routes from said departure place to the destination and designates these routes as candidate routes.

30. A route guiding method wherein route search servers, each of which including a plurality of service providing areas and having a predetermined area as a service providing area, cooperate with one another via a route guiding mediation server to search for an optimal route from a departure place to a destination, both set by a terminal device, and give a guidance for the optimal route; the route guiding method **characterized in that**:
each of the route search servers includes information on candidate nodes connecting a local area and each of the other areas, network data and map data within the local area for route searches, and route search means;
a first route search server which has received a route search request with the departure place and the destination set therein from the terminal device and which has a first area as a service providing area requests candidate route search mediation from said guiding mediation server along with the information of said departure place and destination;
said route guiding mediation server determines a predetermined number of en-route areas which may be en-route in a route leading from the departure place to the destination, transmits a route search request including en-route area information, route search server information of the en-route areas, information of candidate nodes connecting the first area and the en-route areas, and point information of the destination to another second route search server which has a determined en-route area as a service providing area, and requests a search for candidate routes in the corresponding area;
said second route search server distinguishes whether or not the destination is within the local area, and when the destination is within the local area, the second route search server searches for candidate routes to the destination from the corresponding candidate nodes received from said first route search server and transmits the information of the searched candidate routes to said route guiding mediation server, and when the destination is not within the local area, the second route search server designates the candidate nodes connecting said first area with the local area as provisional departure places, designates candidate nodes connecting the local area with the en-route areas received from said first route search server as provisional destinations, searches for candidate routes from the provisional departure places to the provisional destinations, transmits the en-route areas, the route search server information, the candidate node information, and the destination point information to a third route search server which has said en-route areas as service providing areas, requests a candidate route search within a third area, links on the basis of the candidate node information the candidate routes in the third area received from said third route search server with the candidate routes in said local area, and transmits the linked information to said route guiding mediation server; and
said first route search server searches for candidate routes in the first area from said departure place to said candidate nodes, and, based on the candidate node information, links the candidate routes received from said route guiding mediation server with the candidate routes in the first area, designates these routes as candidate routes from the departure place to the destination, determines the candidate route which minimizes the link cost from the departure place to the destination to be a recommended route, and provides the recommended route to said terminal device.
